(19) Europäisches Patentamt
European Patent Office
Office européen des brevets

(11) **EP 3 101 780 A1**

(12) **EUROPEAN PATENT APPLICATION**

(43) Date of publication:
**07.12.2016 Bulletin 2016/49**

(51) Int Cl.:
***H02J 50/10*** *(2016.01)*      ***H01F 21/04*** *(2006.01)*
***H01F 21/00*** *(2006.01)*

(21) Application number: **16172745.8**

(22) Date of filing: **02.06.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **03.06.2015 JP 2015113429**

(71) Applicant: **Funai Electric Co., Ltd.**
**Daito city**
**Osaka 574-0013 (JP)**

(72) Inventor: **NISHIKAWA, Takafumi**
**Osaka 574-0013 (JP)**

(74) Representative: **Osha Liang**
**2, rue de la Paix**
**75002 Paris (FR)**

(54) **POWER SUPPLY APPARATUS AND POWER RECEIVING APPARATUS**

(57)      A power supply apparatus includes a resonant circuit that comprises a coil (5) wound on a plane and determines a resonant frequency, a driver that drives the resonant circuit, and an inductance changing unit (4) connected to a first end portion (51) of the coil. The inductance changing unit (4) moves the first end portion (51) of the coil and changes inductance of the coil (5).

FIG. 3

## Description

[Technical Field]

This invention generally relates to a power supply apparatus and a power receiving apparatus and more particularly relates to a power supply apparatus including a power supply coil and a power receiving apparatus including a power receiving coil.

[Background Art]

A conventional power supply apparatus includes a power supply coil and a conventional power receiving apparatus includes a power receiving coil (for example, see Patent Literature 1).

Patent Literature 1 discloses a wireless power transmission device provided with an inductor. This wireless power transmission device includes a transmission device and a reception device. Moreover, the transmission device includes a resonant circuit and a variable voltage source. Moreover, the resonant circuit includes an inductor and a plurality of capacitors, the plurality of capacitors being configured to include a varicap. Moreover, the varicap has a property where a capacitance value decreases when a voltage value applied from the variable voltage source increases. As a result, the transmission device is configured to be able to adjust a resonant frequency, which is established by an inductance of the inductor and a capacitance value (synthesized capacitance value) of the plurality of capacitors, by adjusting the voltage value of the variable voltage source.

[Citation List]

[Patent Literature]

[Patent Literature 1] Japanese Patent Application Publication No. 2011-166883

Generally, a varicap has a disadvantage where compared to a general capacitor a withstand voltage and a withstand current are small. Therefore, it is difficult for the wireless power transmission device of Patent Literature 1 to supply comparatively large power (for example, power exceeding 100 mW).

[Summary of the Invention]

A power supply apparatus and a power receiving apparatus in accordance with one or more embodiments can adjust a resonant frequency even in a situation where comparatively large power is supplied.

A power supply apparatus according to one or more embodiments of the present invention may comprise a power supply coil that is wound on one plane and has one end among end portions thereof fixedly disposed and a diameter changing unit that supports another end among the end portions of the power supply coil to be movable and supports at least a portion between the one end and the other end to be movable in a radial direction of the power supply coil.

The power supply apparatus according to one or more embodiments of the present invention may comprise the diameter changing unit that supports the other end among the end portions of the power supply coil to be movable and supports at least a portion between the one end and the other end to be movable in the radial direction of the power supply coil. According to this configuration, the winding diameter of the power supply coil can be changed. Therefore, an inductance of the power supply coil can be adjusted and a resonant frequency of a resonant circuit that includes the power supply coil can be adjusted without using a varicap. As a result, the resonant frequency can be adjusted even in a situation where comparatively large power is supplied.

In the power supply apparatus according to one or more embodiments of the present invention, one end among the end portions of the power supply coil may be fixedly disposed on an outer peripheral side of the power supply coil, and the other end among the end portions of the power supply coil may be disposed on an inner peripheral side of the power supply coil. According to this configuration, the end portion (other end) disposed on the inner peripheral side of the power supply coil can be moved to change the winding diameter of the power supply coil; therefore, unlike a situation of moving the end portion disposed on the outer peripheral side of the power supply coil, an outer diameter of the power supply coil can be suppressed from increasing. As a result, the power supply apparatus increasing in size can be suppressed to an extent corresponding to the outer diameter of the power supply coil being suppressed from increasing.

According to one or more embodiments of the present invention, the diameter changing unit may be disposed in a center portion of the power supply coil and includes a rotating member configured to be able to rotate together with an end portion of the power supply coil. According to this configuration, by rotating the rotating member, the winding diameter of the power supply coil can be changed in a state where a position of the rotating member (diameter changing unit) is not moved. As a result, the power supply apparatus increasing in size can be suppressed to an extent corresponding to providing a space for moving a position of the diameter changing unit not being necessary.

In the power supply apparatus according to one or more embodiments of the present invention, the diameter changing unit may comprise a lock member that fixes the rotating member at a plurality of rotation angles. According to this configuration, the rotation angle can be suppressed from shifting after the winding diameter of the power supply coil is changed by the diameter changing portion.

In the power supply apparatus according to one or more embodiments of the present invention, the diameter changing unit may comprise a rotational force transmission member that is connected to be able to transmit a drive force to the rotating member and has a rotational center more on an outer side than the power supply coil. When the rotating member is rotated in a state where a hand or a tool is disposed on (near) an inner side the power supply coil to change the winding diameter of the power supply coil, due to a property (material) of the hand or the tool, a resonant frequency of the power supply apparatus during the change and a resonant frequency of the power supply apparatus in a situation where the hand or the tool is distanced from the power supply coil after the change may change. Therefore, by providing the rotational force transmission member having the rotational center more on the outer side than the power supply coil, the winding diameter of the power supply coil can be changed from the outer side of the power supply coil using the rotational force transmission member. As a result, the hand or the tool affecting the resonant frequency of the power supply apparatus during the change can be suppressed; therefore, the resonant frequency of the power supply apparatus can be appropriately adjusted.

The power supply apparatus according to one or more embodiments of the present invention may further comprise a movement restricting member that interposes the power supply coil from both sides in a direction perpendicular to the plane. According to this configuration, the power supply coil can be restricted from moving in the direction perpendicular to the plane; therefore, a shape of winding can be suppressed from collapsing by a portion of the power supply coil moving in the direction perpendicular to the plane and wire members (or simply "wire") of the power supply coil intersecting each other or the like when changing the winding diameter. As a result, in a situation where the end portion of the power supply coil is moved, the winding diameter of the power supply coil can be changed while maintaining the wound shape of the power supply coil.

In the power supply apparatus according to one or more embodiments of the present invention, the power supply coil may comprise a wire formed by a conductor and wound in a spiral on the plane, and a covering member that has a thickness of one-half or more of a diameter of the wire, is an insulator, is formed by a nonmagnetic body, and is provided to cover at least a portion of a surface of the wire. According to this configuration, a proximity effect between the wires can be suppressed by the covering member whose thickness is large to a certain extent; therefore, reduction of power supply efficiency due to the proximity effect can be suppressed.

In the power supply apparatus according to one or more embodiments of the present invention, the power supply coil may be wound in a spiral on the plane. The power supply apparatus may further comprise a guide portion that is fixedly disposed on a base on which the power supply coil is disposed along the power supply coil wound in the spiral and guides the power supply coil, when at least a portion between the one end and the other end moves in the radial direction of the power supply coil, by contacting the portion of the power supply coil. According to this configuration, the winding diameter of the power supply coil is changed while being guided by the guide portion; therefore, the winding diameter of the power supply coil can be changed while more reliably maintaining the wound shape of the power supply coil.

The power supply apparatus according to one or more embodiments of the present invention may further comprise a resonant capacitor connected to the power supply coil, wherein the resonant capacitor, in a state of being disposed in an initial position that is a position before an end portion of the power supply coil is moved, has a capacitance set so a resonant frequency that is established by the capacitance of the resonant capacitor and an inductance of the power supply coil becomes a value different from a resonant frequency established based on a predetermined standard. According to this configuration, the resonant frequency of the power supply apparatus can be adjusted while moving the end portion of the power supply coil in one direction, from the value that is different from the resonant frequency established based on the predetermined standard toward the resonant frequency established based on the predetermined standard. As a result, unlike a situation of adjusting the resonant frequency of the power supply apparatus while moving alternatingly in one direction and another direction, there is no need to change an adjustment direction; therefore, an adjustment operation can be suppressed from becoming complex.

In the power supply apparatus according to one or more embodiments of the present invention, the diameter changing unit includes a driver that moves an end portion of the power supply coil, and a controller configured to acquire information relating to power supply to an external power receiving apparatus and control an operation of the driver based on the acquired information relating to power supply. According to this configuration, by the controller and the driver, the winding diameter of the power supply coil can be automatically changed to adjust the resonant frequency of the power supply apparatus. Moreover, by configuring the controller to control the operation of the driver based on the information relating to power supply, the winding diameter of the power supply coil can be changed to adjust the resonant frequency of the power supply apparatus not only in a state where the power supply apparatus is not being used (such as when being manufactured) but also during power supply by the power supply apparatus.

The power supply apparatus according to one or more embodiments of the present invention may further comprise a communication unit that communicates with the external power receiving apparatus, wherein the controller may acquires information of received power via the communication unit from the external power receiving apparatus and, based on the acquired information of received power and information of power supplied to the external power receiving apparatus, perform a control of moving an end portion of the power supply coil by the driver so a ratio of the received power relative to the supplied power increases. In a situation where the resonant frequency of the power supply apparatus and a resonant frequency of the power receiving apparatus match, the power supply efficiency (ratio of the received power to the supplied power) increases compared to a situation where the resonant frequency of the power supply apparatus and the resonant frequency of the power receiving apparatus do not match. Therefore, in the present embodiment, by configuring the controller to perform the control of changing the winding diameter by the driver so the ratio of the received power to the supplied power increases, the resonant frequency of the power supply apparatus can be brought closer to the resonant frequency of the power receiving apparatus (substantially matched thereto).

The power supply apparatus according to one or more embodiments of the present invention may further comprise a power source that supplies power to the power supply coil and a standing wave ratio measurement unit that is disposed between the power source and the power supply coil and measures a standing wave ratio of the power, wherein the controller may perform, based on a measurement result of the standing wave ratio of the power by the standing wave ratio measurement unit, a control of moving an end portion of the power supply coil by the driver so the standing wave ratio of the power decreases. When the resonant frequency of the power supply apparatus and the resonant frequency of the power receiving apparatus match, a reflected wave decreases and the standing wave ratio (reflected wave / traveling wave) decreases compared to a situation where the resonant frequency of the power supply apparatus and the resonant frequency of the power receiving apparatus do not match. Therefore, in one or more embodiments of the present invention, by configuring the controller to perform the control of changing the winding diameter by the driver so the standing wave ratio of the power decreases, the resonant frequency of the power supply apparatus and the resonant frequency of the power receiving apparatus can be substantially matched. Moreover, the information relating to power supply to the power receiving apparatus (standing wave ratio) can be acquired by the standing wave ratio measurement unit; therefore, unlike the situation of acquiring the ratio of the received power to the supplied power, there is no need to provide a communication unit for exchanging information of the power between the power supply apparatus and the power receiving apparatus. As a result, the winding diameter can be changed to adjust the resonant frequency of the power supply apparatus even with regard to the power receiving apparatus that is not provided with a communication unit.

The power supply apparatus according to one or more embodiments of the present invention may further comprise a compensation circuit that includes a plurality of capacitors respectively connected to the power supply coil, and a switch that is respectively provided to the plurality of capacitors and is connected in series to the plurality of capacitors, wherein the controller may perform a control of moving an end portion of the power supply coil by the driver based on the information relating to power supply and perform a control of switching a connection state of the plurality of capacitors of the compensation circuit by the switch based on the information relating to power supply. According to this configuration, the resonant frequency of the power supply apparatus can be adjusted in a greater range than compared to a situation of adjusting the resonant frequency of the power supply apparatus by merely changing the winding diameter of the power supply coil.

A power receiving apparatus according to one or more embodiments of the present invention may comprise a resonant circuit that comprises a coil wound on a plane and determines a resonant frequency, a driver that drives the resonant circuit, and an inductance changing unit connected to a first end portion of the coil, the inductance changing unit moving the first end portion of the coil and changing inductance of the coil.

In one or more embodiments, the power receiving coil is wound on one plane and has one end among end portions thereof fixedly disposed and a power-receiving-device-side diameter changing unit supports another end among the end portions of the power receiving coil to be movable and supports at least a portion between the one end and the other end to be movable in a radial direction of the power receiving coil.

The power receiving apparatus according to one or more embodiments of the present invention may comprise the power-receiving-device-side diameter changing unit that supports the other end among the end portions of the power receiving coil to be movable and supports at least a portion between the one end and the other end to be movable in the radial direction of the power receiving coil. In the power receiving apparatus according to one or more embodiments of the present invention as well, similarly to the power supply apparatus according to one or more embodiments of the present invention, a resonant frequency can be adjusted even in a situation where comparatively large power is supplied.

A power supply apparatus according to one or more embodiments of the present invention may comprise a resonant circuit that comprises a coil wound on a plane and determines a resonant frequency, a driver that drives the resonant circuit, and an inductance changing unit connected to a first end portion of the coil. The inductance changing unit may move the first end portion of the coil and change inductance of the coil.

A power receiving apparatus according to one or more embodiments of the present invention may comprise a resonant circuit that comprises a coil wound on a plane and determines a resonant frequency, a driver that drives the resonant circuit, and an inductance changing unit connected to a first end portion of the coil. The inductance changing unit may move the first end portion of the coil and change inductance of the coil.

According to one or embodiments of the present invention, a resonant frequency can be adjusted even in a situation where comparatively large power is supplied.

[Brief Description of Drawings]

FIG.1 is a perspective view illustrating an overall configuration of a power supply apparatus and a power receiving apparatus according to one or more embodiments of a first example of the present invention.

FIG.2 is a block diagram illustrating the overall configuration of the power supply apparatus and the power receiving apparatus according to one or more embodiments of the first example of the present invention.

FIG.3 is an exploded perspective view illustrating a configuration of a diameter changing unit of the power supply apparatus according to one or more embodiments of the first example of the present invention.

FIG.4 is an exploded perspective view illustrating a configuration of a rotating member of the power supply apparatus according to one or more embodiments of the first example of the present invention.

FIG.5 is a diagram for describing a winding diameter of a power supply coil of the power supply apparatus according to one or more embodiments of the first example of the present invention.

FIG.6 is a diagram (1) modeling the power supply coil of the power supply apparatus according to one or more embodiments of the first example of the present invention.

FIG.7 is a diagram illustrating an example of before and after changing the winding diameter of the power supply coil of the power supply apparatus according to one or more embodiments of the first example of the present invention.

FIG.8 is a diagram illustrating a relationship between a drive frequency of the power supply apparatus and a current value flowing in the power supply coil according to one or more embodiments of the first example of the present invention.

FIG.9 is a cross-sectional view illustrating a configuration of the power supply apparatus according to one or more embodiments of the first example of the present invention.

FIG.10 is a plan view illustrating a configuration of a guide portion of the power supply apparatus according to one or more embodiments of the first example of the present invention before the winding diameter of the power supply coil is changed.

FIG.11 is a plan view illustrating a configuration of the guide portion of the power supply apparatus according to one or more embodiments of the first example of the present invention after the winding diameter of the power supply coil is changed.

FIG.12 is a plan view illustrating a configuration of a lock member and a rotating member of a power supply apparatus according to one or more embodiments of a second example of the present invention.

FIG. 13 is an exploded perspective view illustrating the configuration of the lock member of the power supply apparatus according to one or more embodiments of the second example of the present invention.

FIG.14 is a perspective view illustrating a configuration of a substrate of the power supply apparatus according to one or more embodiments of the second example of the present invention.

FIG.15 is a cross-sectional view along line 1000-1000 in FIG.12.

FIG.16 is a perspective view illustrating the configuration of the rotating member of the power supply apparatus according to one or more embodiments of the second example of the present invention.

FIG.17 is a block diagram illustrating an overall configuration of a power supply apparatus and a power receiving apparatus according to one or more embodiments of a third example of the present invention.

FIG.18 is an exploded perspective view illustrating a configuration of a rotation transmission member of the power supply apparatus according to one or more embodiments of the third example of the present invention.

FIG. 19 is a flowchart for describing a change control process of the winding diameter of the power supply coil of the power supply apparatus according to one or more embodiments of the third example of the present invention.

FIG.20 is a block diagram illustrating an overall configuration of a power supply apparatus and a power receiving apparatus according to one or more embodiments of a fourth example of the present invention.

FIG.21 is a circuit diagram illustrating a configuration of a standing wave ratio measurement unit of the power supply apparatus according to one or more embodiments of the fourth example of the present invention.

FIG.22 is a flowchart for describing a change control process of the winding diameter of the power supply coil of the power supply apparatus according to one or more embodiments of the fourth example of the present invention.

FIG.23 is a block diagram illustrating an overall configuration of a power supply apparatus and a power receiving apparatus according to one or more embodiments of a fifth example of the present invention.

FIG.24 is a circuit diagram illustrating a configuration of a compensation circuit of the power supply apparatus according to one or more embodiments of the fifth example of the present invention.

FIG.25 is a flowchart for describing a change control process of a capacitance of the compensation circuit of the power supply apparatus according to one or more embodiments of the fifth example of the present invention.

FIG.26 is a block diagram illustrating a configuration of a power receiving apparatus according to one or more embodiments of a sixth example of the present invention.

FIG.27 is a plan view illustrating a configuration of a covering member according to one or more embodiments of a first modified example of the first to sixth examples of the present invention.

FIG.28 is a plan view illustrating a configuration of a movement restricting member according to one or more embodiments of a second modified example of the first to sixth examples of the present invention.

FIG.29 is a plan view illustrating a configuration of a rotating member and a lock member according to one or more embodiments of a third modified example of the second example of the present invention.

[Detailed Description of Embodiments]

Embodiments of the present invention will be described in detail below, with reference to the drawings. In the following description of embodiments of the invention, numerous specific details are set forth in order to provide a more thorough understanding of the invention. However, it will be apparent to one of ordinary skill in the art that the invention may be practiced without these specific details. In other instances, well-known features have not been described in detail to avoid obscuring the invention.

(First Example)

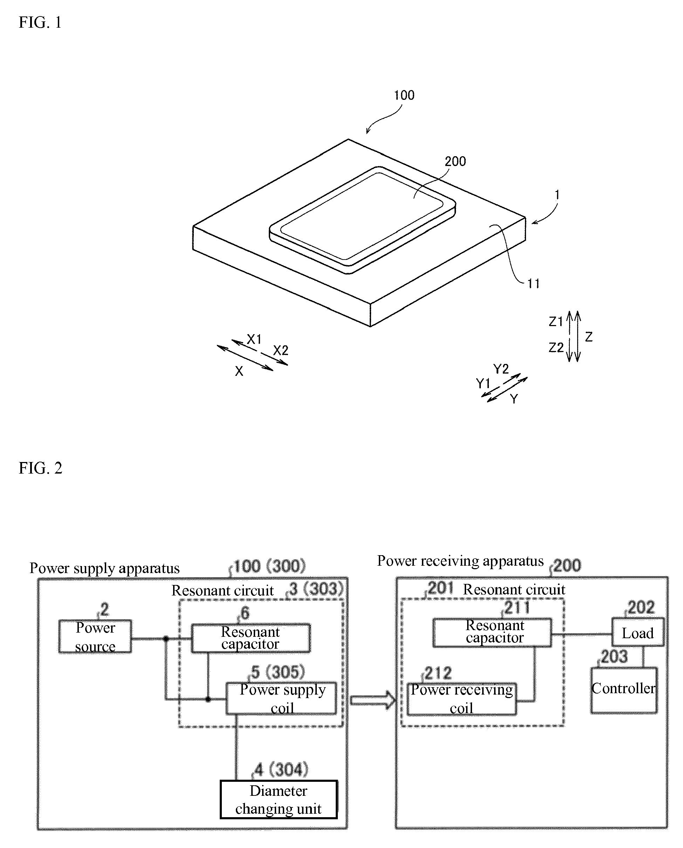

A configuration of a power supply apparatus 100 according to one or more embodiments of a first example of the present invention will be described with reference to FIGS.1 to 11. As illustrated in FIG.1, the power supply apparatus 100 according to one or more embodiments of the first example of the present invention may supply power (as a non-contact power supply apparatus or a no-contact power supply apparatus) using a magnetic resonance method to a power receiving apparatus 200 disposed near the power supply apparatus 100 without providing wiring, a contact, or the like between the power supply apparatus 100 and the power receiving apparatus 200.

(Overall Configuration of Power supply apparatus)

As illustrated in FIG.1, the power supply apparatus 100 includes a housing unit 1. The power receiving apparatus 200 may be placed on a surface on an arrow-Z1-direction side of a top board 11 of the housing unit 1. Moreover, the power supply apparatus 100 may supply power in a state where the power receiving apparatus 200 is placed on the top board 11. The top board 11 is one example of the "movement restricting member" of one or more embodiments of the present invention.

As illustrated in FIG.2, the power supply apparatus 100 includes a power source 2, a resonant circuit 3, and a diameter changing unit 4 (inductance changing unit). Moreover, the power source 2 is configured to supply to the resonant circuit 3 power of an alternating current having a predetermined drive frequency.

The resonant circuit 3 includes a power supply coil 5 and a resonant capacitor 6 and has a resonant frequency established by an inductance of the power supply coil 5 and a capacitance of the resonant capacitor 6. The power supply coil 5 is configured to generate a powered magnetic field by the power supplied from the power source 2 to supply power to the power receiving apparatus 200.

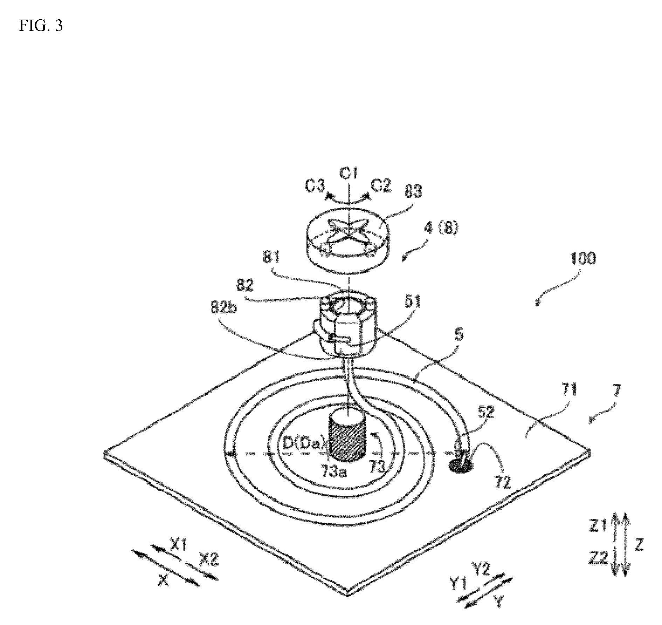

According to one or more embodiments of the first example of the present invention, as illustrated in FIG.3, the power supply coil 5 is wound on one plane (XY plane) and has an end portion 52 fixedly disposed. Moreover, the diameter changing unit 4 is configured to support an end portion 51 of the power supply coil 5 to be movable and support at least a portion between the end portion 51 and the end portion 52 to be movable in a radial direction (X direction and Y direction) of the power supply coil 5. Moreover, the diameter changing unit 4 is configured to move the end portion 51 of the power supply coil 5 to change a winding diameter D (average value Da of the winding diameter D) of at least a portion of the power supply coil 5. As a result, the power supply apparatus 100 is configured to be able to change the resonant frequency by the inductance of the power supply coil 5 being changed by the winding diameter D of the power supply coil 5 being changed. In other words, the diameter changing unit 4 may move the end portion 51 of the power supply coil 5 and change inductance of the power supply coil 5.

(Configuration of Each Unit of Power supply apparatus)

As illustrated in FIG.3, the power supply apparatus 100 includes a substrate 7. The substrate 7 is formed by an insulator and a nonmagnetic body. Moreover, the substrate 7 is formed in a tabular shape and is configured so a pattern of a conductor can be formed on a top surface and in an inner portion. The substrate 7 is one example of the "base" and the "movement restricting member" according to one or more embodiments of the present invention.

The substrate 7 includes a land 72 and a contact post portion 73 on a surface 71 in the arrow-Z1 direction. Moreover, the land 72 is connected to the power source 2 (see FIG.2) via wiring (not illustrated). Moreover, the contact post portion 73 is formed in a cylindrical column shape whose center axis is an axis C1. Moreover, a metal plating treatment is applied on a surface of the contact post portion 73. Moreover, the contact post portion 73 has a conductor film 73a. Moreover, the conductor film 73a contacts the resonant capacitor 6 (see FIG.2) via the pattern (not illustrated) in the substrate 7 and wiring (not illustrated).

According to one or more embodiments of the first example of the present invention, the end portion 52 of the power supply coil 5 is fixedly connected to (disposed on) the land 72 of the substrate 7 on an outer peripheral side of the power supply coil 5. Moreover, the end portion 51 of the power supply coil 5 is disposed on an inner peripheral side (near the axis C1) of the power supply coil.

For example, the power supply coil 5 is formed as a spiral coil and is wound in a spiral on the top surface (XY plane) of the substrate 7. That is, the power supply coil 5 is disposed to approach the axis C1 while drawing an arc from the land 72 where the end portion 52 is connected such that the winding diameter D gradually decreases. An average value of the winding diameter D of the power supply coil is the average value Da.

(Configuration of Diameter Changing Unit)

According to one or more embodiments of the first example of the present invention the diameter changing unit 4 is disposed in a center portion (near the axis C1) of the power supply coil 5 and includes a rotating member 8 configured to be able to rotate together with the end portion 51 of the power supply coil 5. Moreover, the diameter changing unit 4 (rotating member 8) is configured to move the end portion 51 of the power supply coil 5 to change the average value Da of the winding diameter D of the power supply coil 5.

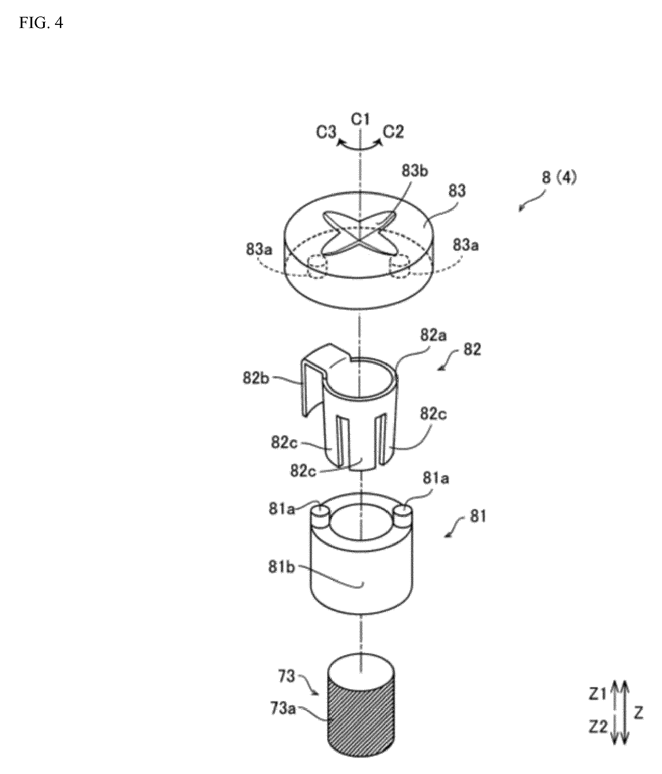

For example, as illustrated in FIG.4, the rotating member 8 includes a collar member 81, a contact terminal 82, and a top member 83. Moreover, the rotating member 8 is configured to be able to be installed to the contact post portion 73 of the substrate 7. For example, a configuration is such that the contact post portion 73, the collar member 81, the contact terminal 82, and the top member 83 assemble to each other in a Z direction.

The collar member 81 has a cylindrical tube shape and is configured so the contact post portion 73 and the contact terminal 82 can be disposed inside the cylindrical tube. Moreover, the collar member 81 has two protruding portions 81 a that protrude in the arrow-Z1 direction on a top surface on an arrow-Z1-direction side. Moreover, the two protruding portions 81 a are configured to fit in two hole portions 83a of the top member 83.

The contact terminal 82 includes a cylindrical tube portion 82a formed in a cylindrical tube shape by a conductor and a hang portion 82b provided to cover a portion of an outer peripheral surface 81 b of the collar member 81.

An arrow-Z2-direction side (substrate-7 side) of the cylindrical tube portion 82a is formed as a biasing member 82c. The biasing member 82c is configured to bias in a direction toward the axis C1 in a state of being installed to the contact post portion 73. As a result, the contact terminal 82 can rotate around the axis C1 relative to the contact post portion 73 by the cylindrical tube portion 82a while the state of contacting the contact post portion 73 is maintained by the biasing member 82c.

As illustrated in FIG.3, the hang portion 82b is connected by soldering or the like to the end portion 51 of the power supply coil 5. As a result, the contact terminal 82 is configured to rotate together with the end portion 51 of the power supply coil 5 when rotating around the axis C1. Moreover, the collar member 81 and the contact terminal 82 are fixed to each other by the hand portion 82b, and the collar member 81 and the contact terminal 82 are configured to rotate together relative to the contact post portion 73 around the axis C1.

The top member 83 includes the two hole portions 83a on an arrow-Z2-direction side and a groove portion 83b on an arrow-Z1-direction side. The two hole portions 83a are configured to fit with the protruding portion 81 a described above. Moreover, the groove portion 83b is configured to engage with, for example, a tip of a rotation tool (not illustrated; for example, a driver). As a result, the top member 83 is configured to be rotated in an arrow-C2 direction or an arrow-C3 direction using the rotation tool.

As a result, when the top member 83 is rotated, the collar member 81, the contact terminal 82, and the end portion 51 of the power supply coil 5 rotate together in the arrow-C2 direction or the arrow-C3 direction.

For example, as illustrated in FIG.3, in a situation where the top member 83 is rotated in the arrow-C2 direction, with the power supply coil 5, because the end portion 51 is moved and wound relative to the rotating member 8 (collar member 81), the average value Da of the winding diameter D decreases from before being rotated. Meanwhile, in a situation where the top member 83 is rotated in the arrow-C3 direction, winding of the power supply coil 5 is relaxed and the average value Da of the wining diameter D of the power supply coil 5 increases from before being rotated. That is, the power supply coil 5 is configured to be able to change the average value Da of the winding diameter D by the rotating member 8 being rotated.

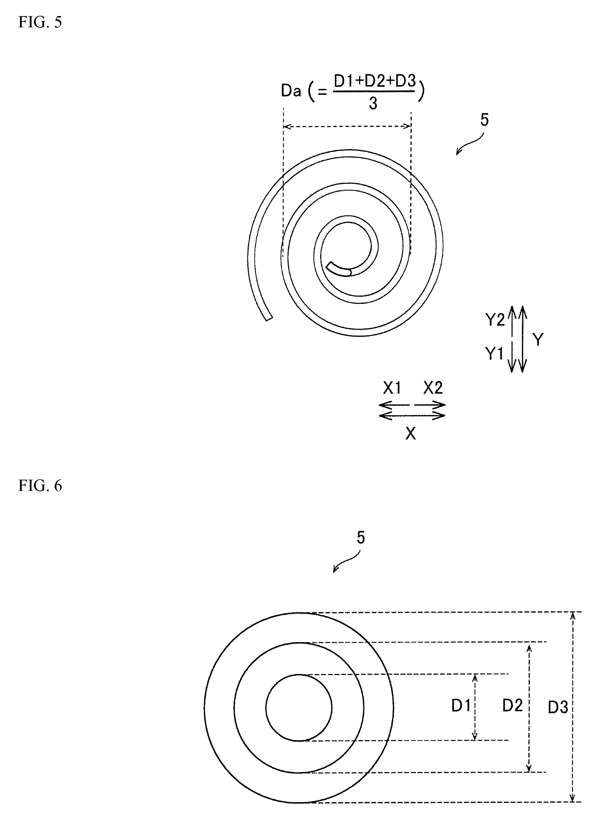

The power supply coil 5 illustrated in FIG.5 can be modeled as a combination of a plurality of coils. For example, as illustrated in FIG.6, it can be modeled as a combination of a coil having a winding diameter D1, a coil having a wining diameter D2, and a coil of a winding diameter D3. In this situation, the average value Da of the winding diameter D of the power supply coil 5 can be expressed as an average value of the winding diameters D1 to D3.

Furthermore, the smaller the average value Da of the winding diameter D becomes, the smaller the inductance of the power supply coil 5 becomes and the greater the resonant frequency becomes, and the greater the average value Da of the winding diameter D becomes, the greater the inductance of the power supply coil 5 becomes and the smaller the resonant frequency becomes.

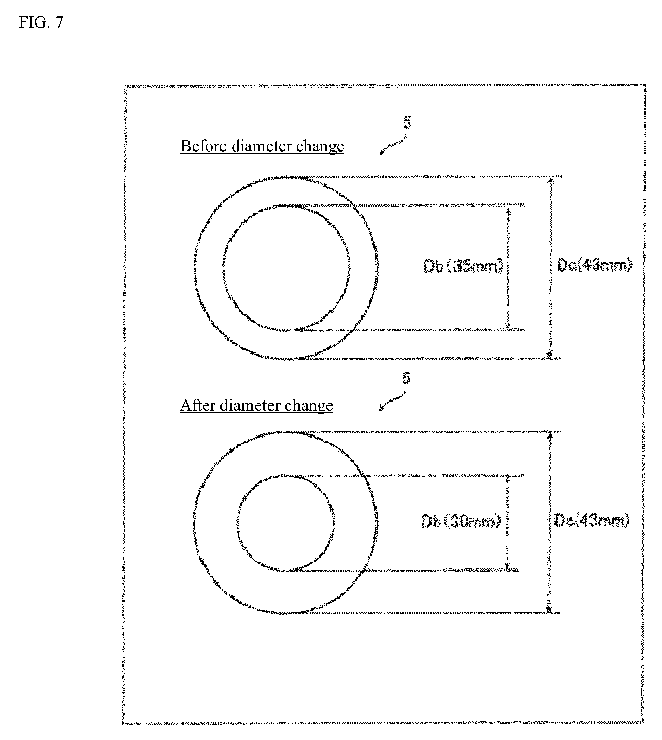

Furthermore, the power supply coil 5, as illustrated in FIG.7, can also be modeled as a coil having an inner diameter Db and an outer diameter Dc. Moreover, because the winding diameter D on the inner peripheral side of the power supply coil 5 is changed by the rotating member 8, in the power supply apparatus 100 according to embodiments of the first example of the present invention, it can be deemed that a configuration is such that only the inner diameter Db is changed. For example, by making the outer diameter Dc to be a constant 43 mm and the average value Da of the winding diameter D being changed from a state where the inner diameter Db is 35 mm, in a situation where the inner diameter Db changes to 30 mm, the inductance of the power supply coil 5 changes from 0.3 $\mu$H to 0.24 $\mu$H.

According to one or more embodiments of the first example of the present invention, the resonant capacitor 6, in a state where the end portion 51 of the power supply coil 5 is disposed in an initial position that is a position before being moved, has a capacitance set so a resonant frequency that is established by the capacitance of the resonant capacitor 6 and the inductance of the power supply coil 5 becomes a value different from a resonant frequency that is established based on a predetermined standard.

For example, the resonant capacitor 6 is configured so, for example, the capacitance becomes about 2.3 nF. Moreover, in a situation where the state of being disposed in the initial position that is the position before the end portion 51 of the power supply coil 5 is moved is made to be, for example, a state where the inner diameter Dd above is 35 mm, the resonant frequency is 6.06 MHz when formula (1) below is used. Moreover, the predetermined standard is, for example, the A4WP standard or the like, and in this situation, the established resonant frequency is 6.78 MHz. That is, the capacitance of the resonant capacitor 6 is set so the resonant frequency becomes 6.06 MHz, which is different from 6.78 MHz, in the initial state of the power supply coil 5.

[Formula 1]

$$f = \frac{1}{2\pi \times \sqrt{L \times C}} \cdot \cdot \cdot (1)$$

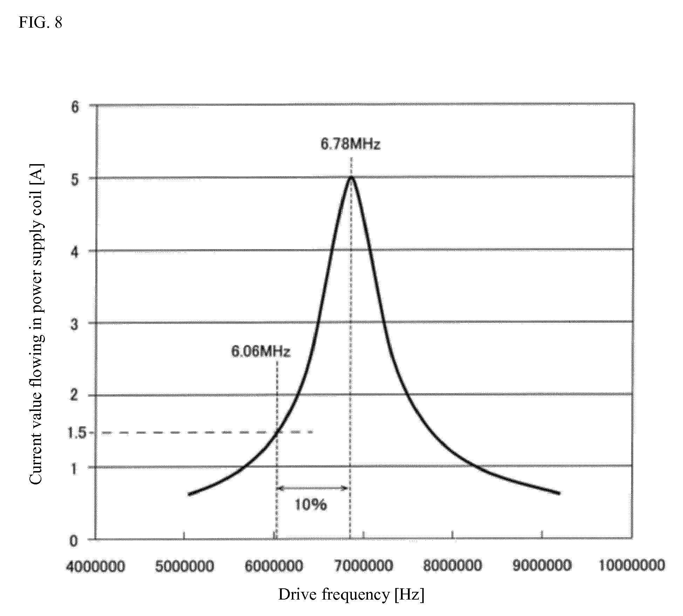

Furthermore, as illustrated in FIG.8, the power supply coil 5 is configured so the inductance can change by about 10% by the average value Da of the winding diameter D being changed. As a result, for example, even in a situation where only a current whose current value is about 1.5 A flows in the power supply coil 5, by changing the inductance by 10%, it is possible to change to a situation where a current whose current value is 5 A can be flowed.

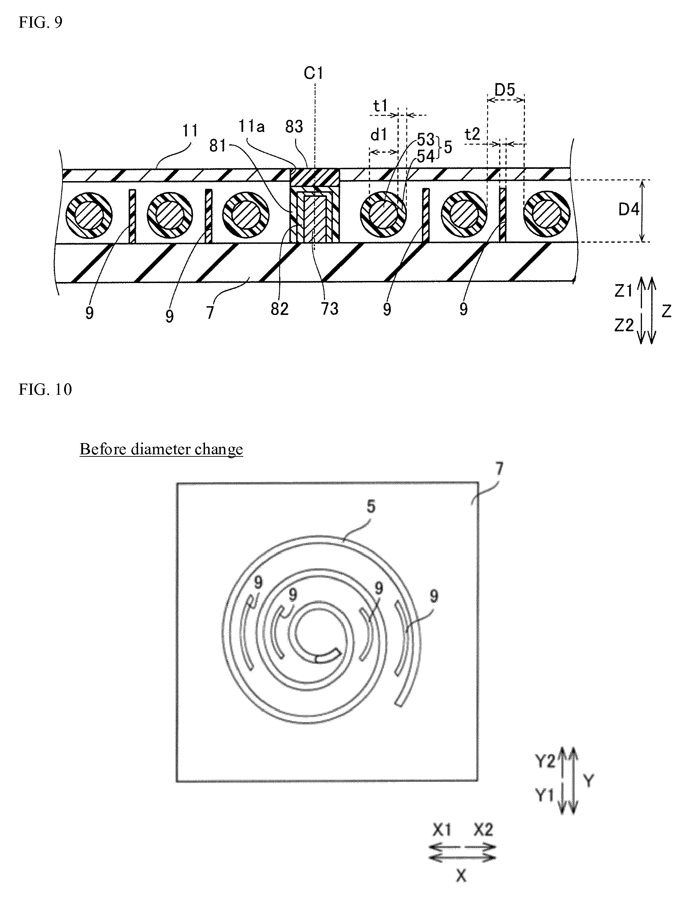

Furthermore, according to one or more embodiments of the first example of the present invention, as illustrated in FIG.9, the power supply coil 5 includes a wire member (or "wire") 53 formed by a conductor. In a situation where the wires 53 are disposed near each other, a proximity effect may arise where the current becomes less likely to flow. Therefore, according to one or more embodiments of the first example of the present invention the power supply coil 5 includes a covering member 54. The covering member 54 is an insulator and is formed by a nonmagnetic body, has a thickness t1 that is equal to or greater than a thickness where the proximity effect between the wires 53 can be suppressed, and is provided to cover a surface of the wire 53.

For example, the covering member 54 has the thickness t1, which is equal to or greater than one half of a diameter d1 of the wire 53. In the power supply coil 5 according to one or more embodiments of the first example of the present invention, by the above being one-half of the diameter d1 of the wire 53, it is possible to suppress the proximity effect between the wires 53. As a result, a distance between adjacent wires 53 covered by the covering member 54 becomes at least twice the thickness t1 and the proximity effect is suppressed.

Furthermore, according to one or more embodiments of the first example of the present invention, the top board 11 and the substrate 7 interpose the power supply coil 5 from both sides in the Z direction.

For example, the top board 11 is, for example, is an insulator and formed by a nonmagnetic body and is formed in a tabular shape so as to spread on a plane parallel to the plane (XY plane) on which the power supply coil 5 is wound. Moreover, the top board 11 and the substrate 7 have an interval D4 along the Z direction. The interval D4 is configured to be greater than a diameter of the power supply coil 5 (size where twice the thickness t2, and the diameter d1, are added). Moreover, the power supply coil 5 is disposed between the top board 11 and the substrate 7. As a result, the power supply coil 5 is restricted by the upper surface 1 and the substrate 7 from moving in the arrow-Z1 direction or the arrow-Z2 direction (the power supply coil 5 floating up) by exceeding a range of the interval D4.

Furthermore, an opening portion 11 a is provided in a central portion (near the axis C1) of the top board 11, and a configuration is such that the top member 83 described above is disposed in the opening portion 11 a. As a result, the top member 83 can be rotated from outside the power supply apparatus 100.

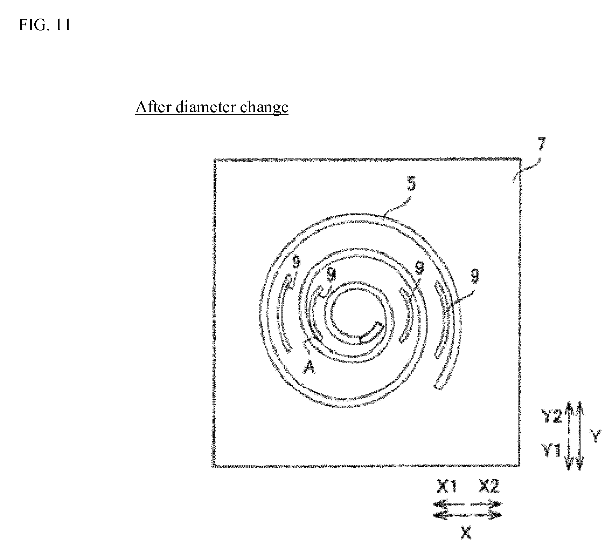

According to one or more embodiments of the first example of the present invention, the power supply apparatus 100 includes a guide portion 9. The guide portion 9, as illustrated in FIG.10, is fixedly disposed on the substrate 7 on which the power supply coil 5 is disposed along the power supply coil 5 wound in the spiral and, as illustrated in FIG.11, is configured to contact and guide a portion of the power supply coil 5 (for example, point A in FIG.11) when the winding diameter D is changed (when at least a portion between the end portion 51 and the end portion 52 is moved in the radial direction [X direction and Y direction] of the power supply coil 5).

For example, as illustrated in FIG.9, the guide portion 9 is an insulator, is formed by a nonmagnetic body, and is formed so as to protrude from the substrate 7 to the arrow-Z1-direction side. Moreover, the guide portion 9 is configured to be disposed in a gap having a size D5 of the wound power supply coil 5. Moreover, as illustrated in FIG.10, the guide portion 9 has an arc shape when viewed from the arrow-Z 1-direction side and is disposed along the wound power supply coil 5. Moreover, the thickness t2 of the guide portion 9 is configured to be less than the size D5 (size of a pitch) of the gap of the wound power supply coil 5.

(Configuration of Power receiving apparatus)

Next, a configuration of the power receiving apparatus 200 is described with reference to FIG.2.

The power receiving apparatus 200 consists of, for example, a mobile phone (smart phone). The power receiving apparatus 200 includes a resonant circuit 201, a load 202, and a controller 203.

The resonant circuit 201 includes a resonant capacitor 211 and a power receiving coil 212. The resonant circuit 201 is configured so a resonant frequency established by a capacitance of the resonant capacitor 211 and an inductance of the power receiving coil 212 becomes a resonant frequency established by a predetermined standard (for example, the A4WP standard) (for example, 6.78 MHz). Moreover, the power receiving coil 212 is configured to electromagnetically couple with the power supply coil 5 and is configured to receive the power from the power supply coil 5.

The load 202 is, for example, configured as a circuit that consumes power to exhibit various functions (for example, functions as a smart phone) of the power receiving apparatus 200.

The controller 203 is configured to control an operation of the load 202.

(Effects of First Example)

According to one or more embodiments of the first example of the present invention, one or more of the following effects can be obtained.

According to one or more embodiments of the first example of the present invention as above, the power supply apparatus 100 includes the diameter changing unit 4 configured to support the end portion 51 of the power supply coil 5 to be movable and support at least a portion between the end portion 51 and the end portion 52 to be movable in the radial direction (X direction and Y direction) of the power supply coil 5. As a result, the winding diameter D of the power supply coil 5 can be changed; therefore, the inductance of the power supply coil 5 can be adjusted and the resonant frequency of the resonant circuit 3 that includes the power supply coil 5 can be adjusted without using a varicap. As a result, the resonant frequency can be adjusted even in a situation where comparatively large power is supplied.

Furthermore, according to one or more embodiments of the first example of the present invention as above, the end portion 52 of the power supply coil 52 is fixedly disposed on the outer peripheral side of the power supply coil 5 and the end portion 51 of the power supply coil 51 is disposed on the inner peripheral side of the power supply coil 5. Moreover, the diameter changing unit 4 is configured to move the end portion 51 of the power supply coil 5 to change the average value Da of the winding diameter D of the power supply coil 5. As a result, the end portion 52 disposed on the inner peripheral side of the power supply coil 5 can be moved to change the average value Da of the winding diameter D of the power supply coil 5; therefore, unlike the situation of moving the end portion 51 disposed on the outer peripheral side of the power supply coil 5, the outer diameter Dc of the power supply coil 5 can be suppressed from increasing. As a result, the power supply apparatus 100 increasing in size can be suppressed to an extent corresponding to the outer diameter Dc of the power supply coil 5 being suppressed from increasing. Moreover, by configuring the diameter changing unit 4 to change the average value Da of the winding diameter D of the power supply coil 5, compared to a situation of changing only one winding diameter D of the power supply coil 5, a change per winding diameter that is changed can be decreased. As a result, a shape of winding of the power supply coil 5 changing (the shape of winding collapsing) can be suppressed to an extent corresponding to the change per one winding diameter that is changed being able to be decreased.

Furthermore, according to one or more embodiments of the first example of the present invention as above, the diameter changing unit 4 is disposed in the center portion (near the axis C1) of the power supply coil 5 and provided with the rotating member 8 that is configured to be able to rotate together with the end portion 51 of the power supply coil 5. As a result, by rotating the rotating member 8, the winding diameter D of the power supply coil 5 can be changed in a state where the position of the rotating member 8 (diameter changing unit 4) is not moved (state of being disposed near the axis C1). As a result, the power supply apparatus 100 increasing in size can be suppressed to an extent corresponding to providing a space for moving the position of the diameter changing unit 4 not being necessary.

Furthermore, according to one or more embodiments of the first example of the present invention as above, the top board 11 and the substrate 7 interpose the power supply coil 5 from both sides in a direction perpendicular to the plane (Z direction). As a result, the power supply coil 5 can be restricted from moving in the direction perpendicular to the plane (Z direction); therefore, the shape of winding can be suppressed from collapsing by a portion of the power supply coil 5 moving in the direction perpendicular to the plane (arrow-Z1 direction or arrow-Z2 direction) and the wires 53 of the power supply coil 5 intersecting each other or the like when changing the winding diameter D. As a result, in a situation where the end portion 51 of the power supply coil 5 is moved, the winding diameter D of the power supply coil 5 can be changed while maintaining the wound shape of the power supply coil 5.

Furthermore, according to one or more embodiments of the first example of the present invention as above, the power supply coil 5 is configured to include the wire 53 that is formed by a conductor and is wound in the spiral on the plane (XY plane), and the covering member 54 that has the thickness t1 of the predetermined thickness or more where suppressing the proximity effect between the wires 53 is possible, is an insulator, is formed by a nonmagnetic body, and is provided to cover at least a portion of the surface of the wire 53. As a result, the proximity effect between the wires 53 can be suppressed by the covering member 54 whose thickness is large to a certain extent; therefore, reduction of power supply efficiency due to the proximity effect can be suppressed.

Furthermore, according to one or more embodiments of the first example of the present invention as above, the power supply coil 5 is configured to wind in the spiral on the plane (XY plane). Moreover, the power supply apparatus 100 includes the guide portion 9 that is fixedly disposed on the substrate 7 on which the power supply coil 5 is disposed along the power supply coil 5 wound in the spiral and is configured to contact and guide a portion of the power supply coil 5 when the end portion 51 is moved. As a result, the winding diameter D of the power supply coil 5 is changed while being guided by the guide portion 9; therefore, the winding diameter D of the power supply coil 5 can be changed while more reliably maintaining the wound shape of the power supply coil 5.

Furthermore, according to one or more embodiments of the first example of the present invention as above, the capacitance of the resonant capacitor 6 is set so, in the state where the end portion 52 of the power supply coil 5 is disposed in the initial position that is the position before being moved, the resonant frequency that is established by the capacitance of the resonant capacitor 6 and the inductance of the power supply coil becomes a value different from the resonant frequency established based on the predetermined standard. As a result, the resonant frequency of the power supply apparatus 100 can be adjusted while moving the end portion 51 of the power supply coil 5 in one direction, from the value that is different from the resonant frequency established based on the predetermined standard toward the resonant frequency established based on the predetermined standard. As a result, unlike a situation of adjusting the resonant frequency of the power supply apparatus 100 while moving alternatingly in one direction and another direction, there is no need to change an adjustment direction; therefore, an adjustment operation can be suppressed from becoming complex.

(Second Example)

Next, a configuration of a power supply apparatus 300 according to one or more embodiments of a second example of the present invention will be described with reference to FIGS.2 and 12 to 16. The power supply apparatus 300 according to one or more embodiments of the second example of the present invention includes a lock member 301 that fixes a rotating member 308 at a plurality of rotation angles. Configurations identical to those of embodiments of the first example of the present invention are labeled with the same reference signs and description thereof is omitted.

(Configuration of Power supply apparatus According to Second Example)

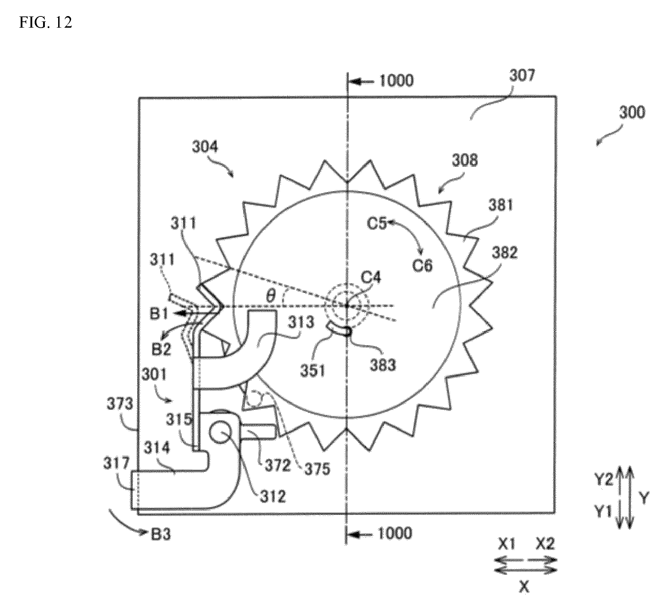

As illustrated in FIGS.2 and 12, the power supply apparatus 300 according to one or more embodiments of the second example of the present invention includes a resonant circuit 303 that has a power supply coil 305, and a diameter changing unit 304 that has the lock member 301 and the rotating member 308. Moreover, as illustrated in FIG.12, the power supply apparatus 300 includes a substrate 307. The substrate 307 is one example of the "base" one or more embodiments of the present invention.

According to one or more embodiments of the second example of the present invention, the diameter changing unit 304 includes the lock member 301 that fixes the rotating member 308 at the plurality of rotation angles (every θ degrees).

The lock member 301 includes a claw portion 311. The claw portion 311 is configured to engage with a tooth portion 381 of the rotating member 308, and the rotation angle of the rotating member 308 is fixed in a state where the claw portion 311 and the tooth portion 381 are engaged. Moreover, when the rotating member 308 rotates in an arrow-C5 direction or an arrow-C6 direction with a center C4 as a rotational axis, the claw portion 311 has a force applied thereto in an arrow-B1 direction by the tooth portion 381. As a result, the claw portion 311 is configured to move (deform) in an arrow-B2 direction and become disengaged so the rotating member 308 is rotated.

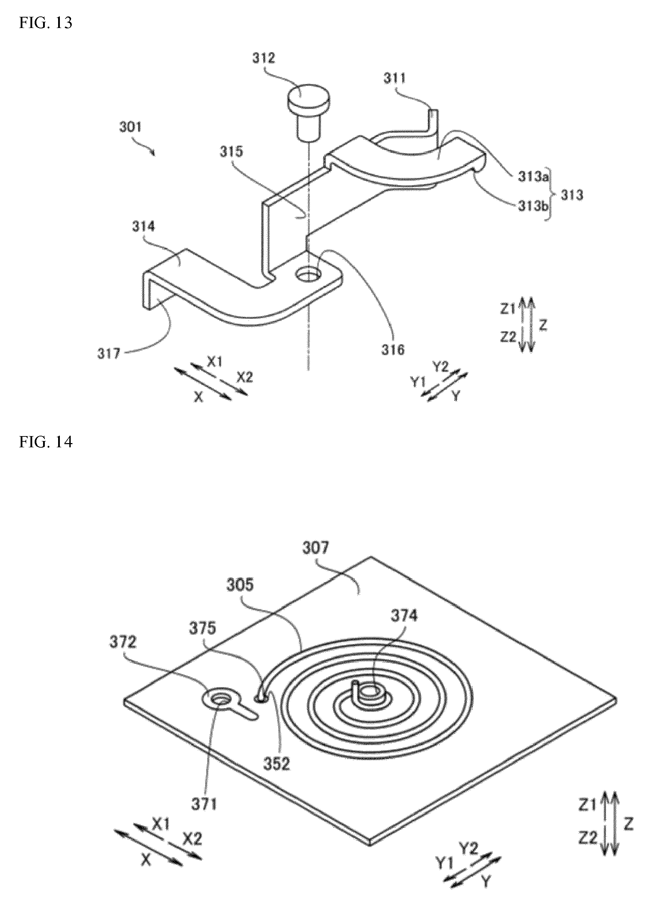

For example, as illustrated in FIG.13, the lock member 301 includes the claw portion 311, a caulk 312, a contact member 313, a first support portion 314, a second support portion 315, a hole portion 316, and an engagement portion 317, all of which are formed by a conductor (metal plate).

The first support portion 314 is formed in a tabular shape having a surface parallel to the substrate 307 (XY plane). Moreover, the first support portion 314 includes the hole portion 316, which penetrates in the Z direction.

The caulk 312 is configured to be fixed together with the first support portion 314 by being press fitted in a hole 371 (see FIG.14) of the substrate 307 via the hole portion 316. Moreover, as illustrated in FIG. 14, a land 372 is provided on a top surface near the hole 371 of the substrate 307, and the land 372 is provided to contact the first support portion 314 in a state where the caulk 312 is fixed.

As illustrated in FIG.13, the second support portion 315 is connected to the first support portion 314 and formed in a tabular shape that spreads in the YZ plane. The second support portion 315 is connected to the claw portion 311 and the contact member 313. Moreover, as illustrated in FIG. 12, the second support portion 315 is configured to elastically deform (see the dotted-line portion in FIG. 12) so as to move the claw portion 311 in the arrow-B2 direction in the situation where the claw portion 311 is applied with the force in the arrow-B 1 direction by the tooth portion 381.

The engagement portion 317 is connected to the first support portion 314 and is formed in a tabular shape that spreads in the YZ plane. Moreover, the engagement portion 317 is configured to engage with an end portion 373 of the substrate 307. Moreover, the engagement portion 317 is configured to maintain a state where the first support portion 314 is engaged to the end portion 373 so as to not rotate in the arrow-B3 direction when the claw portion 311 is applied with the force in the arrow-B 1 direction.

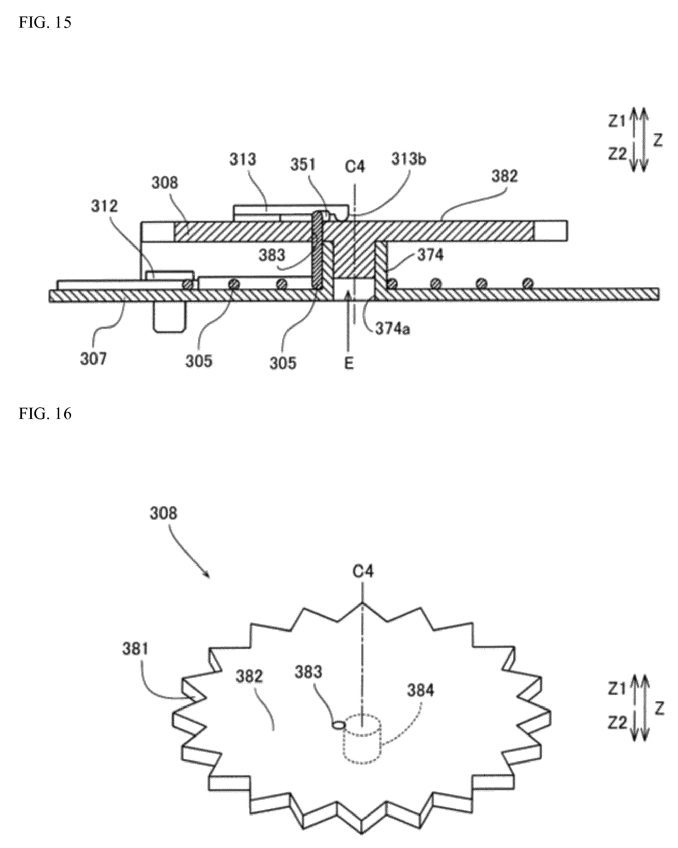

As illustrated in FIG.13, the contact member 313 includes a plate portion 313a and a contact 313b. The plate portion 313b is formed to extend from the second support portion 315 to the center C4 of the rotating member 308. Moreover, as illustrated in FIG. 15, the contact 313b is configured to contact an upper surface 382 of the rotating member 308.

As illustrated in FIG.16, the rotating member 308 is formed by a conductor and is configured as a gear that can rotate around the center C4. Moreover, the rotating member 308 includes the tooth portion 381, the upper surface 382, a hole portion 383, and a shaft portion 384.

The tooth portion 381 is configured to engage with the claw portion 311 of the lock member 301. The upper surface 382 contacts and is electrically connected to the contact member 313 of the lock member 301. The hole portion 383 is provided near the center C4 and is configured as a through hole that penetrates in the Z direction. The shaft portion 384 is formed to have a cylindrical column shape whose center axis is the center C4 and is configured to be able to be installed to a tubular portion 374 formed on the substrate 307 in a state of being movable around the center C4.

As illustrated in FIG. 14, the power supply coil 305 is disposed on a surface on an arrow-Z1-direction side of the substrate 307 and is wound in a spiral. Moreover, as illustrated in FIG. 15, the power supply coil 305 is wired on an upper-surface-382 side of the rotating member 308 via the hole portion 383. Moreover, an end portion 351 of the power supply coil 305 is fixed by soldering or the like on the upper surface 382 of the rotating member 308. Moreover, as illustrated in FIG. 14, the end portion 352 of the power supply coil 305 is connected to a land 375 of the substrate 307.

Furthermore, the land 372 connected to the lock member 301 is connected to the power source 2 via wiring (not illustrated). Moreover, the land 375 connected to the power supply coil 305 is connected to the resonant capacitor 6 via wiring (not illustrated). As a result, a circuit for power supply is formed by the power source 2, the lock member 301, the rotating member 308, and the power supply coil 305.

The tubular portion 374 of the substrate 307 has an opening 374a on an arrow-Z2-direction side. As a result, the substrate 307 is configured to be able to rotate the rotating member 308 around the center C4 from an arrow-E direction (outside) using, for example, a rotation tool.

Furthermore, other configurations of the power supply apparatus 300 according to embodiments of the second example of the present invention are similar to those of the power supply apparatus 100 according to embodiments of the first example of the present invention.

(Effects of Second Example)

According to one or more embodiments of the second example of the present invention, one or more of the following effects can be obtained.

According to one or more embodiments of the second example of the present invention, as above, the diameter changing unit 304 includes the lock member 301 that fixes the rotating member 308 at the plurality of rotation angles (every θ degrees). As a result, the rotation angle can be suppressed from shifting after the winding diameter D of the power supply coil 305 is changed by the diameter changing portion 304.

Furthermore, other effects of the power supply apparatus 300 according to one or more embodiments of the second example of the present invention are similar to those of the power supply apparatus 100 according to embodiments of the first example of the present invention.

(Third Example)

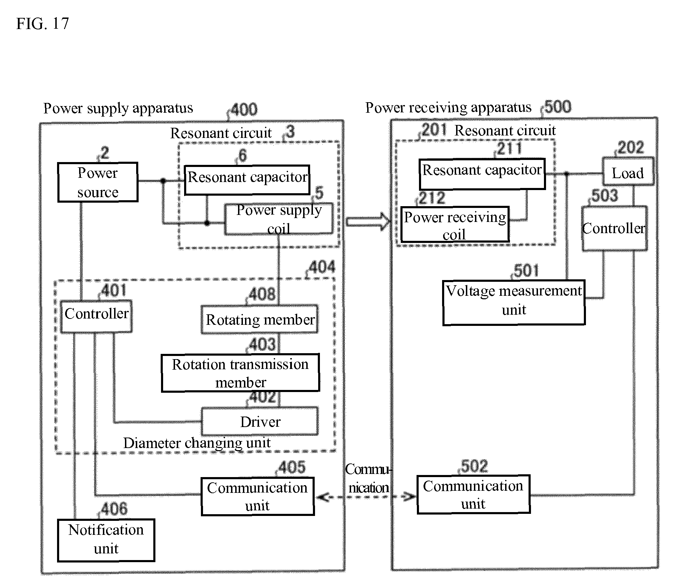

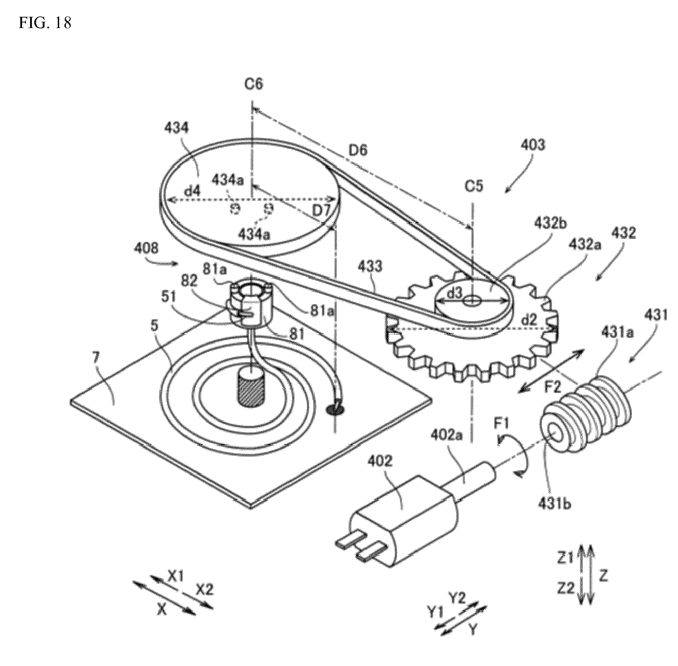

Next, a configuration of a power supply apparatus 400 according to one or more embodiments of a third example of the present invention will be described with reference to FIGS.17 and 18. The power supply apparatus 400 according to one or more embodiments of the third example of the present invention includes with a controller 401, a driver 402, a rotation transmission member 403, and a communication unit 405 in addition to the configuration of the power supply apparatus 100 according to one or more embodiments of the first example of the present invention. Moreover, the power supply apparatus 400 and a power receiving apparatus 500 according to one or more embodiments of the third example of the present invention are configured to be able to function as a power supply system that performs power supply from the power supply apparatus 400 to the power receiving apparatus 500. Configurations identical to those of embodiments of the first or second examples of the present invention are labeled with the same reference signs and description thereof is omitted.

(Configuration of Power supply apparatus According to Third Example)

As illustrated in FIG.17, the power supply apparatus 400 according to one or more embodiments of the third example of the present invention includes a diameter changing unit 404, the communication unit 405, and a notification unit 406. Moreover, the diameter changing unit 404 includes the controller 401, the driver 402, the rotation transmission member 403, and a rotating member 408.

According to one or more embodiments of the third example of the present invention, as illustrated in FIG.18, the rotation transmission member 403 has a rotational center (axis C5) more on an outer side (on an arrow-X2-direction side) than the power supply coil 5.

For example, the rotation transmission member 403 includes a worm gear 431, a helical gear 432, a belt 433, and a pulley 434. The worm gear 431 is one example of the "lock member" of one or more embodiments of the present invention. Moreover, the helical gear 432 is one example of the "lock member" of one or more embodiments of the present invention.

The worm gear 431 includes a tooth portion 431a and a hole portion 431b. The hole portion 431b is configured so a shaft portion 402a of the driver 402 can be installed. Moreover, the worm gear 431 is configured to rotate in an arrow-F1 direction in conjunction with rotation in the arrow-F1 direction of the shaft portion 402a.

Furthermore, the tooth portion 431a of the worm gear 431 is configured to engage with a gear portion 432a of the helical gear 432 and is configured to convert the rotation in the arrow-F1 direction by the driver 402 into parallel movement in an arrow-F2 direction for the tooth portion 432a.

The helical gear 432 is configured by the gear portion 432a, which has a diameter d2 around the axis C5, and a pulley portion 432b, which has a diameter d3 that is smaller than the diameter d2 around the axis C5. The gear portion 432a and the pulley portion 432b are configured to rotate around the axis C5 by a force being applied in the arrow-F2 direction by the worm gear 431. The pulley portion 432b has one side of a belt 433 (flat belt) installed on an outer periphery and is configured to transmit rotation to the belt 433. Because the diameter d3 is smaller than the diameter d2, rotation from the worm gear 431 is decelerated and transmitted to the belt 433.

A distance D6 between the axis C5 and an axis C6, which is a center axis around which the power supply coil 5 is wound, is greater than an outer diameter D7 of the winding diameter D of the power supply coil 5. That is, the rotation transmission member 403 (helical gear 432) has a rotational center (axis C5) more on the outer side (on the arrow-X2-direction side) than the power supply coil 5.

Furthermore, another side of the belt 433 is installed to the outer periphery of the pulley 434. Moreover, the belt 433 is configured to transmit rotation from the helical gear 432 to the pulley 434.

The pulley 434 is formed in a disk shape having a diameter d4, which is greater than the diameter d3, and is configured to rotate around the axis C6 that is the rotational center of the power supply coil 5. As a result, rotation from the helical gear 432 is decelerated and transmitted to the pulley 434.

Furthermore, two hole portions 434a are provided on an arrow-Z2-direction side of the pulley 434. The hole portion 434a is configured to fit with the protruding portion 81a of the collar member 81 of the rotating member 408 and is configured to transmit rotation around the axis C6 to the collar member 81. As a result, the end portion 51 of the power supply coil 5 is rotated by rotating the shaft portion 402a of the driver 402 and the average value Da of the winding diameter D of the power supply coil 5 is changed.

Furthermore, even in a situation where a force (torque) for returning the winding diameter D to an original state arising due to the average value Da of the winding diameter D of the power supply coil 5 being changed is transmitted in the arrow-F2 direction from the helical gear 432 to the worm gear 431, the worm gear 431 is not rotated in the arrow-F1 direction. That is, the worm gear 431 and the helical gear 432 have a function of a lock member that fixes the rotation angle of the power supply coil 5.

The driver 402 is configured by, for example, a motor. Moreover, the driver 402 is configured to rotate the shaft portion 402a in the arrow-F1 direction based on a command from the controller 401.

The communication unit 405 is configured to perform wireless communication based on a predetermined standard (for example, the Bluetooth [registered trademark] low-energy standard) with the power receiving apparatus 500.

The notification unit 406 includes a display unit, an indicator, an audio generation unit, and the like and is configured to perform, based on a command from the controller 401, display by the display unit, generation of a light by the indicator, or generation of a sound by the audio generation unit to notify a user of predetermined information.

According to one or more embodiments of the third example of the present invention, the controller 401 is configured to acquire information relating to power supply to the power receiving apparatus 500 and control an operation of the driver 402 based on the acquired information relating to power supply.

According to one or more embodiments of the third example of the present invention, a configuration is such that information of received power is acquired via the communication unit 405 from the power receiving apparatus 500 and, based on the acquired information of received power and information of power supplied to the power receiving apparatus 500, a control is performed of changing (the average value Da of) the winding diameter D (moving the end portion 51) by the driver 402 so a ratio of the received power to the supplied power increases.

For example, the controller 401 is configured to acquire during power supply a supplied power value Pt as the information of the power supplied to the power receiving apparatus 500 from the power source 2. Moreover, the controller 401 is configured to acquire via the communication unit 405 a received power value Pr as the information of the received power from the power receiving apparatus 500.

Furthermore, the controller 401 is configured to calculate a power supply efficiency η (= received power value Pr / supplied power value Pt).

When the power supply efficiency η is exceedingly low (for example, in a situation of being less than a stopping threshold Th1 [for example, less than 25%]), a malfunction in the power supply apparatus 400 or the power receiving apparatus 500 may occur. Therefore, the controller 401 may perform a control of stopping supply of the power from the power source 2 when the power supply efficiency η is less than the stopping threshold Th1. Moreover, in this situation, the controller 401 may perform a control of notifying the user by the notification unit 406 that the power supply efficiency η is exceedingly low (that a malfunction in the power supply apparatus 400 or the power receiving apparatus 500 may occur). By supply of the power from the power source 2 being stopped, the malfunction in the power supply apparatus 400 or the power receiving apparatus 500 worsening can be suppressed.

Furthermore, the controller 401 is configured to perform a control of reopening supply of the power from the power source 2 in a situation where after power supply is stopped the power supply efficiency η becomes equal to or greater than the stopping threshold value Th1.

Furthermore, in a situation where the power supply efficiency η is comparatively low (for example, in a situation of being less than a notifying threshold Th2 [for example, less than 50%] and equal to or greater than the stopping threshold Th1), for example, a disposition position of the power receiving apparatus 500 relative to the power supply apparatus 400 may not be appropriate or a foreign object (such as metal) may be disposed between the power supply apparatus 400 and the power receiving apparatus 500. Therefore, the controller 401 is configured to perform a control of performing a notification from the notification unit 406 to the user that the supply efficiency η is comparatively low (that an abnormality relating to power supply may be arisen) in the situation where the power supply efficiency η is less than the notifying threshold Th2 and equal to or greater than the stopping threshold Th1. As a result, a possibility of an abnormality can be notified to the user. As a result, when the abnormality is resolved by the user in the power supply apparatus 400, it becomes possible to perform power supply from the power supply apparatus 400 to the power receiving apparatus 500 in a state where the power supply efficiency η is further increased.

Furthermore, the controller 401 is configured to control driving of the driver 402 so the power supply efficiency η becomes equal to or greater than an optimum threshold Th3 (for example, 90% or more) in a situation where the power supply efficiency η is equal to or greater than the notifying threshold Th2. For example, the controller 401 is configured to perform a control of repeating driving the driver 402 and comparing the power supply efficiency η and the optimum threshold Th3.

(Configuration of Power receiving apparatus According to Third Example)

As illustrated in FIG.17, the power receiving apparatus 500 includes a voltage measurement unit 501, a communication unit 502, and a controller 503.

The voltage measurement unit 501 is connected between the resonant circuit 201 and the load 202 and is configured to measure a received voltage value Vr. Moreover, the controller 503 is configured to acquire the received voltage value Vr from the voltage measurement unit 501 and perform a control of calculating the received power value Pr based on the received voltage value Vr. Moreover, the communication unit 502 is configured to communicate with the power supply apparatus 400 by wireless communication based on a predetermined standard (for example, the Bluetooth [registered trademark] low-energy standard). Moreover, the controller 503 is configured to transmit the received power value Pr to the power supply apparatus 400 via the communication unit 502.

Furthermore, other configurations of the power supply apparatus 400 according to one or more embodiments of the third example of the present invention are similar to those of the power supply apparatus 100 according to embodiments of the first example of the present invention.

(Change Control Process of Winding Diameter of Power Supply Coil)

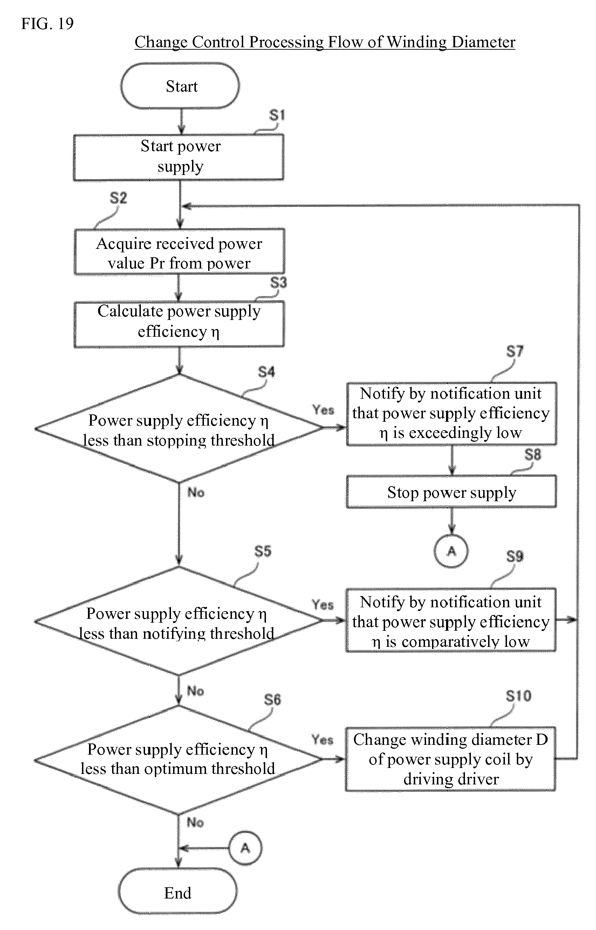

Next, a change control processing flow of the winding diameter D of the power supply coil 5 by the power supply apparatus 400 according to one or more embodiments of the third example of the present invention will be described with reference to FIG.19. The following control process is executed by the controller 401.

First, at step S1, power supply is started. Afterward, the flow proceeds to step S2.

At step S2, the received power value Pr is acquired from the power receiving apparatus 500 via the communication unit 405. Afterward, the flow proceeds to step S3.

At step S3, the supplied power value Pt is acquired from the power source 2 and the power supply efficiency $\eta$ (= Pr/Pt) is calculated. Afterward, the flow proceeds to step S4.

At step S4, it is determined whether the power supply efficiency $\eta$ is less than the stopping threshold Th1. In a situation where the power supply efficiency $\eta$ is less than the stopping threshold Th1, the flow proceeds to step S7, and in a situation where the power supply efficiency is not less than the stopping threshold Th1 (equal to or greater than Th1), the flow proceeds to step S5.

At step S5, it is determined whether the power supply efficiency $\eta$ is less than the notifying threshold Th2. In a situation where the power supply efficiency $\eta$ is less than the notifying threshold Th2, the flow proceeds to step S9, and in a situation where the power supply efficiency is not less than the notifying threshold Th2 (equal to or greater than Th2), the flow proceeds to step S6.

At step S6, it is determined whether the power supply efficiency $\eta$ is less than the optimum threshold Th3. In a situation where the power supply efficiency $\eta$ is less than the optimum threshold Th3, the flow proceeds to step S10, and in a situation where the power supply efficiency is not less than the optimum threshold Th3 (equal to or greater than Th3), the change control process of the winding diameter D is ended.

Furthermore, at step S7 to which the flow proceeds in the situation where the power supply efficiency $\eta$ is less than the stopping threshold Th1 at step S4, a notification is made by the notification unit 406 that the power supply efficiency $\eta$ is exceedingly low (that a malfunction in the power supply apparatus 400 or the power receiving apparatus 500 may occur). Afterward, the flow proceeds to step S8.

At step S8, power supply is stopped. Afterward, the change control process of the winding diameter D is ended. After the change control process of the winding diameter D is ended, in a situation of again performing a control of starting step S1, power supply is restarted in a situation where the power supply efficiency $\eta$ becomes equal to or greater than the stopping threshold Th1 at step S4 (the power supply efficiency $\eta$ is improved).

Furthermore, at step S9 to which the flow proceeds in the situation where the power supply efficiency $\eta$ is less than the notifying threshold Th2 at step S5, a notification is made by the notification unit 406 that the power supply efficiency $\eta$ is comparatively low. Afterward, the flow returns to step S2. That is, by returning to step S2, in the situation where the power supply efficiency $\eta$ is less than the notifying threshold Th2, steps S2 to S5 and S9 are repeated. Moreover, in a situation where the power supply efficiency becomes equal to or greater than the notifying threshold Th2, notification is ended.

Furthermore, at step S10 to which the flow proceeds in the situation where the power supply efficiency $\eta$ is less than the optimum threshold Th3 at step S6, the driver 402 is driven to change the winding diameter D of the power supply coil 5. Afterward, the flow returns to step S2. That is, by returning to step S2, steps S2 to S6 and S10 are repeated until the power supply efficiency $\eta$ becomes equal to or greater than the optimum threshold Th3. Moreover, in a situation where the power supply efficiency $\eta$ becomes equal to or greater than the optimum threshold Th3, the change control process of the winding diameter D is ended.

(Effects of Third Example)

According to one or more embodiments of the first example of the present invention, one or more of the following effects can be obtained.

According to one or more embodiments of the third example of the present invention, as above, the diameter changing unit 404 is configured to be connected to be able to transmit the drive force to the rotating member 408 and include a rotational force transmission unit 403 (helical gear 432) having the rotational center (axis C5) more on the outer side than the power supply coil 5. It is thought that in a situation where the rotating member 408 is rotated using a hand or a tool (in a state where the hand or the tool is disposed on [near] the inner side of the power supply coil 5) to change the winding diameter D of the power supply coil 5, due to a property (material) of the hand or the tool, a resonant frequency of the power supply apparatus 500 during the change and a resonant frequency of the power supply apparatus 400 in a situation where the hand or the tool is distanced from the power supply coil after the change may change. Therefore, by providing the rotational force transmission unit 403 (helical gear 432) having the rotational center (axis C5) more on the outer side than the power supply coil 5, the winding diameter D of the power supply 5 can be changed from the outer side of the power supply coil 5 using the rotational force transmission unit 403. As a result, the hand or the tool can be suppressed from affecting the resonant frequency of the power supply apparatus 400 during the change; therefore, the resonant frequency of the power supply apparatus 400 can be appropriately adjusted.

Furthermore, according to one or more embodiments of the third example of the present invention, as above, the diameter changing unit 404 includes the driver 402 that moves the end portion 51 of the power supply coil 5, and the controller 401 configured to acquire the information relating to power supply to the power receiving apparatus 500 (received power value Pr) and control the operation of the driver 402 based on the acquired information relating to power supply. As a result, by the controller 401 and the driver 402, the winding diameter D of the power supply coil 5 can be automatically changed to adjust the resonant frequency of the power supply apparatus 500. Moreover, by configuring the controller 401 to control the operation of the driver 402 based on the information relating to power supply, the winding diameter D of the power supply coil 5 can be changed to adjust the resonant frequency of the power supply apparatus 500 not only in a state where the power supply apparatus 500 is not being used (such as when being manufactured) but also during power supply by the power supply apparatus 500.

Furthermore, according to one or more embodiments of the third example of the present invention, as above, the power supply apparatus 500 includes the communication unit 405 configured to communicate with the power receiving apparatus 500. Moreover, the controller 401 is configured to acquire the received power value Pr via the communication unit 405 from the power receiving apparatus 500 and, based on the acquired received power value Pr and the power value Pt supplied to the power receiving apparatus 500, perform the control of changing the winding diameter D by the driver 402 so the ratio of the received power value Pr to the supplied power value Pt (power supply efficiency η increases. In a situation where the resonant frequency of the power supply apparatus 400 and the resonant frequency of the power receiving apparatus 500 match, the power supply efficiency η increases compared to a situation where the resonant frequency of the power supply apparatus 400 and the resonant frequency of the power receiving apparatus 500 do not match. Therefore, according to one or more embodiments of the third example of the present invention, by configuring the controller 401 to perform the control of changing the winding diameter D (moving the end portion 51) by the driver 402 so the power supply efficiency η increases, the resonant frequency of the power supply apparatus 400 can be brought closer to the resonant frequency of the power receiving apparatus 500 (substantially matched thereto).

Furthermore, other effects of the power supply apparatus 400 according to one or more embodiments of the third example of the present invention are similar to those of the power supply apparatus 100 according to embodiments of the first example of the present invention.

(Fourth Example)

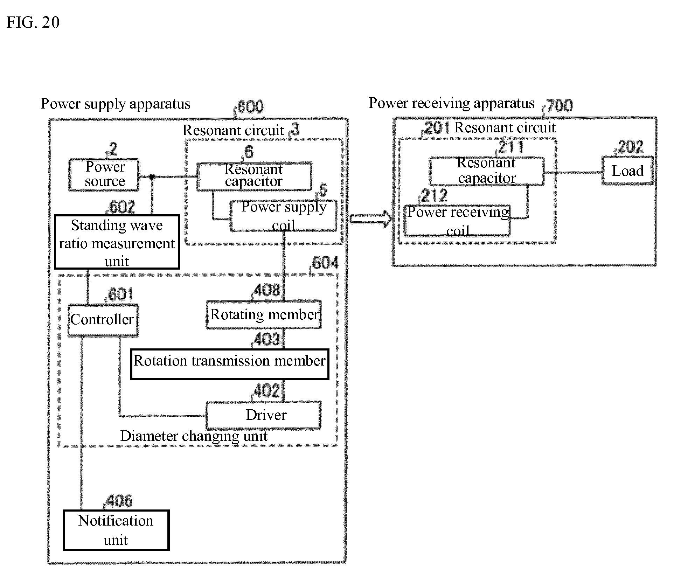

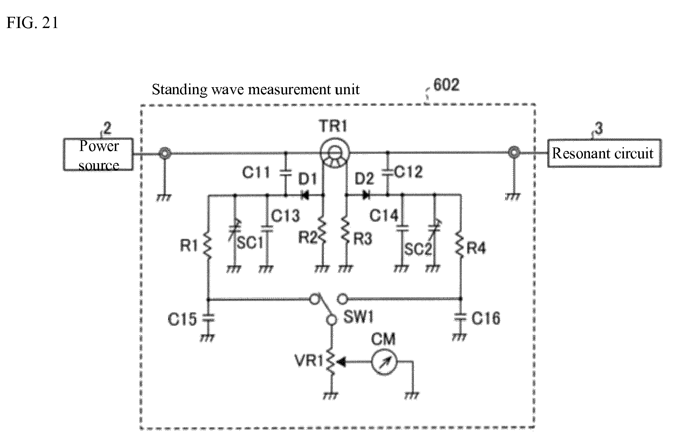

Next, a configuration of a power supply apparatus 600 according to one or more embodiments of a fourth example of the present invention will be described with reference to FIGS. 20 and 21. The power supply apparatus 600 according to one or more embodiments of the fourth example of the present invention, unlike the power supply apparatus 500 according to one or more embodiments of the third example of the present invention configured to perform the control of changing the winding diameter D of the power supply coil 5 based on the power supply efficiency η, is configured to perform a control of changing the winding diameter D of the power supply coil 5 based on a standing wave ratio p. Configurations identical to those of embodiments of the first to the third examples of the present invention are labeled with the same reference signs and description thereof is omitted.

(Configuration of Power supply apparatus According to Fourth Example)

As illustrated in FIG.20, the power supply apparatus 600 according to one or more embodiments of the fourth example of the present invention includes a diameter changing unit 604 and the notification unit 406. The diameter changing unit 604 includes a controller 601 and a standing wave ratio measurement unit 602.

According to one or more embodiments of the fourth example of the present invention, the standing wave ratio measurement unit 602 is disposed between the power source 2, which supplies the power to the power supply coil 5, and the resonant circuit 3 (power supply coil 5) and configured to measure the standing wave ratio p of the power. Moreover, the controller 601 is configured to perform a control of changing the winding diameter D (moving the end portion 51) by the driver 402 so the standing wave ratio p of the power decreases based on a measurement result of the standing wave ratio p of the power of the standing wave ratio measurement unit 602.

Between the power source 2 and the resonant circuit 3, a waveform of the power enters a state where a traveling wave that travels from the power source 2 to the resonant circuit 3 and a reflected wave from the resonant circuit 3 (power receiving apparatus 700) are synthesized.

Furthermore, as illustrated in FIG.21, the standing wave ratio measurement unit 602 includes, for example, a trans TR1, capacitors C11 to C16, semi-fixed capacitors SC1 and SC2, diodes D1 and D2, resistors R1 to R4, a variable resistor VR1, a current meter CM, and a switch SW1. Moreover, the standing wave ratio measurement unit 602 is configured to measure the standing wave ratio p, which is a ratio between the traveling wave that travels from the power source 2 to the resonant circuit 3 and the reflected wave that returns from the resonant circuit 3 to the power source 2. Moreover, the controller 601 is configured to acquire the standing wave ratio p from the standing wave ratio measurement unit 602.

The controller 601 is configured to perform the control of stopping supply of power from the power source 2 in a situation where the standing wave ratio p is equal to or greater than a stopping threshold Th4 (for example, 75% or more). Moreover, in this situation, the controller 601 is configured to perform the control of notifying the user by the notification unit 406 that the standing wave ratio p is exceedingly low (that a malfunction in the power supply apparatus 600 or the power receiving apparatus 700 may occur). By supply of the power from the power source 2 being stopped, the malfunction in the power supply apparatus 600 or the power receiving apparatus 700 worsening can be suppressed.

Furthermore, the controller 601 is configured to perform a control of reopening supply of the power from the power source 2 in a situation where after power supply is stopped the standing wave ratio p becomes equal to or greater than the stopping threshold value Th4.

Furthermore, the controller 601 is configured to perform a control of performing a notification from the notification unit 406 to the user that the standing wave ratio p is comparatively large (that an abnormality relating to power supply may be arisen) when the standing wave ratio p is greater than the notifying threshold Th5 (for example, greater than 50%) and less than the stopping threshold Th4.

Furthermore, the controller 601 is configured to control driving of the driver 402 so the standing wave ratio p becomes equal to or greater than an optimum threshold Th6 (for example, less than 10%) in a situation where the standing wave ratio p is less than the notifying threshold Th5.

(Configuration of Power receiving apparatus According to Fourth Example)

As illustrated in FIG.20, the power receiving apparatus 700 is configured by the resonant circuit 201 and the load 202. That is, the power receiving apparatus 700, unlike the power receiving apparatus 500 according to one or more embodiments of the third example of the present invention, is not provided with the communication unit 502.

Furthermore, other configurations of the power supply apparatus 600 according to one or more embodiments of the fourth example of the present invention are similar to those of the power supply apparatus 100 according to embodiments of the first example of the present invention.

(Change Control Process of Winding Diameter of Power Supply Coil)

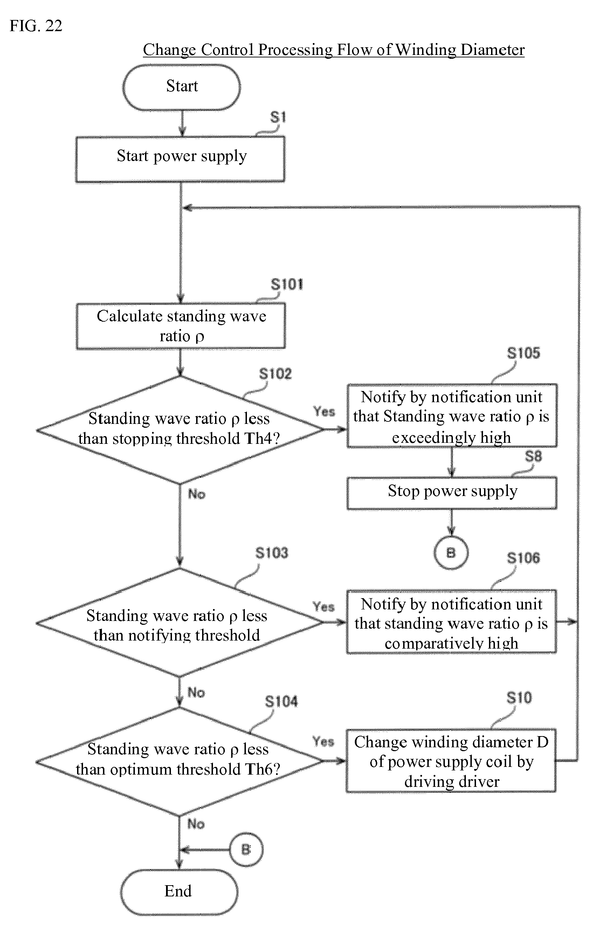

Next, a change control processing flow of the winding diameter D of the power supply coil 5 by the power supply apparatus 600 according to one or more embodiments of the fourth example of the present invention will be described with reference to FIG.22. The following control process is executed by the controller 601. Moreover, processes identical to those of the change control processing flow of the winding diameter D of the power supply coil 5 according to the power supply apparatus 400 according to one or more embodiments of the third example of the present invention (see FIG. 19) are labeled with the same reference signs.

First, at step S1, power supply is started. Afterward, the flow proceeds to step S101.

At step S101, the standing wave ratio p is calculated. Afterward, the flow proceeds to step S102.

At step S102, it is determined whether the standing wave ratio p is equal to or greater than the stopping threshold Th4. In a situation where the standing wave ratio p is equal to or greater than the stopping threshold Th4, the flow proceeds to step S105, and in a situation where the standing wave ratio p is not equal to or greater than the stopping threshold Th4 (less than Th4), the flow proceeds to step S103.

At step S103, it is determined whether the standing wave ratio p is equal to or greater than the notifying threshold Th5. In a situation where the standing wave ratio p is equal to or greater than the notifying threshold Th5, the flow proceeds to step S106, and in a situation where the standing wave ratio p is not equal to or greater than the notifying threshold Th5 (less than Th5), the flow proceeds to step S104.

At step S104, it is determined whether the standing wave ratio p is equal to or greater than the optimum threshold Th6. In a situation where the standing wave ratio p is equal to or greater than the optimum threshold Th6, the flow proceeds to step S10, and in a situation where the standing wave ratio p is not equal to or greater than the optimum threshold Th6 (less than Th6), the change control process of the winding diameter D is ended.

Furthermore, at step S105 to which the flow proceeds in the situation where the standing wave ratio p is equal to or greater than the stopping threshold Th4 at step S102, a notification is made by the notification unit 406 that the standing wave ratio p is exceedingly high (that a malfunction in the power supply apparatus 400 or the power receiving apparatus 500 may occur). Afterward, the flow proceeds to step S8.

At step S8, power supply is stopped. Afterward, the change control process of the winding diameter D is ended.

Furthermore, at step S106 to which the flow proceeds in the situation where the standing wave ratio p is equal to or greater than the notifying threshold Th5 at step S103, a notification is made by the notification unit 406 that the standing wave ratio p is comparatively high. Afterward, the flow returns to step S101.

Furthermore, at step S106 to which the flow proceeds in the situation where the standing wave ratio p is equal to or greater than the optimum threshold Th6 at step S104, the driver 402 is driven to change the winding diameter D of the power supply coil 5. Afterward, the flow returns to step S101.

(Effects of Fourth Example)

According to one or more embodiments of the fourth example of the present invention, one or more of the following effects such as below can be obtained.

According to one or more embodiments of the fourth example of the present invention, as above, the power supply apparatus 600 includes the power source 2, which supplies the power to the power supply coil 5, and the standing wave ratio measurement unit 602 that is disposed between the power source 2 and the power supply coil 5 and measures the standing wave ratio p of the power. Moreover, the controller 601 is configured to perform the control of changing the winding diameter D (moving the end portion 51) by the driver 402 so the standing wave ratio p of the power decreases based on the measurement result of the standing wave ratio p of the power of the standing wave ratio measurement unit 602. In a situation where a resonant frequency of the power supply apparatus 600 and a resonant frequency of the power receiving apparatus 700 match, the reflected wave decreases and the standing wave ratio p (reflected wave / traveling wave) decreases compared to a situation where the resonant frequency of the power supply apparatus 600 and the resonant frequency of the power receiving apparatus 700 do not match. Therefore, according to one or more embodiments of the fourth example of the present invention, by configuring the controller 601 to perform the control of changing the winding diameter D (moving the end portion 51) by the driver 402 so the standing wave ratio p of the power decreases, the resonant frequency of the power supply apparatus 600 and the resonant frequency of the power receiving apparatus 700 can be substantially matched. Moreover, the standing wave ratio p (information relating to power supply to the power receiving apparatus 700) can be acquired by the standing wave ratio measurement unit 602 provided in the power supply apparatus 600; therefore, unlike the situation of acquiring the ratio of the received power to the supplied power, there is no need to provide a communication unit for exchanging information of the power between the power supply apparatus 600 and the power receiving apparatus 700. As a result, the winding diameter D can be appropriately changed to adjust the resonant frequency of the power supply apparatus 600 even with regard to the power receiving apparatus 700 that is not provided with a communication unit.

Furthermore, other effects of the power supply apparatus 600 according to embodiments of the fourth example of the present invention are similar to those of the power supply apparatus 100 according to embodiments of the first example of the present invention.

(Fifth Example)

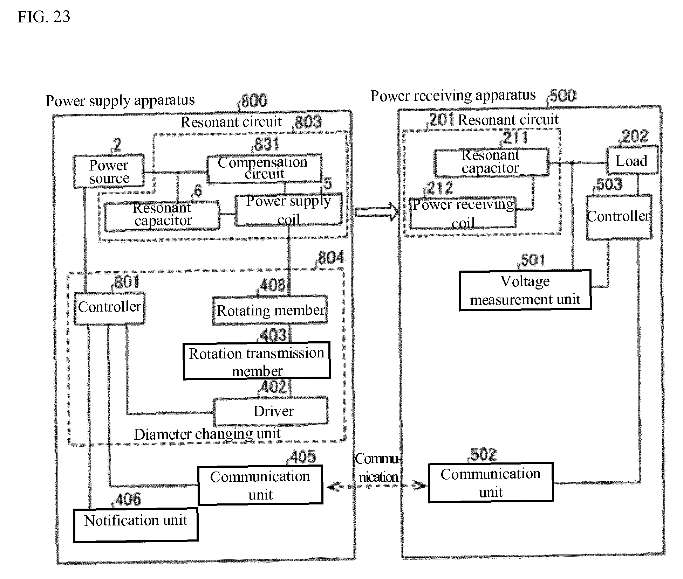

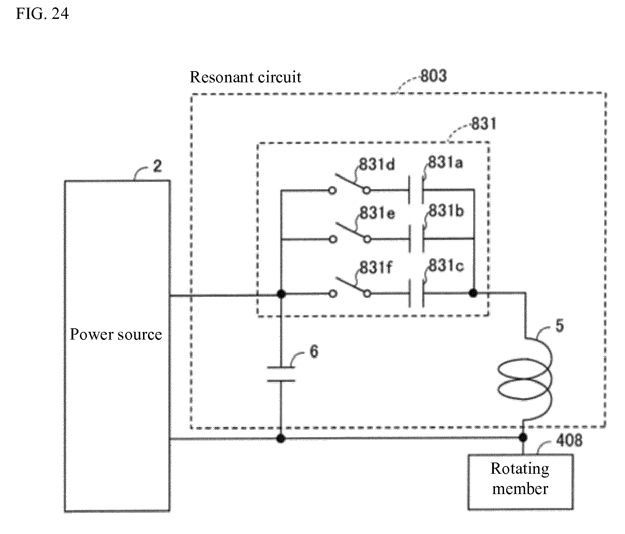

Next, a configuration of a power supply apparatus 800 according to one or more embodiments of a fifth example of the present invention will be described with reference to FIGS.23 and 24. The power supply apparatus 800 according to one or more embodiments of the fifth example of the present invention includes a compensation circuit 831 in a resonant circuit 803 in addition to the power supply coil 5 and the resonant capacitor 6. Configurations identical to those of embodiments of the first to the fourth examples of the present invention are labeled with the same reference signs and description thereof is omitted.

(Configuration of Power supply apparatus According to Fifth Example)

As illustrated in FIG.23, the power supply apparatus 800 according to one or more embodiments of the fifth example of the present invention includes the resonant circuit 803 and a diameter changing unit 804. The diameter changing unit 804 includes a controller 801. The resonant circuit 803 includes the compensation circuit 831.

According to one or more embodiments of the fifth example of the present invention, the compensation circuit 831 includes capacitors 831a to 831c respectively connected to the power supply coil 5 and switches 831d to 831f respectively provided to the capacitors 831a to 831c. Moreover, the controller 801 is configured to perform a control of changing the winding diameter D by the driver 402 based on information relating to power supply and perform a control of switching a connection state of the capacitors 831a to 831c of the compensation circuit 801 by the switches 831d to 831f based on the information relating to power supply. The information relating to power supply is similar to the information relating to power supply according to one or more embodiments of the third example of the present invention (power supply ratio η).

For example, as illustrated in FIG.24, the capacitors 831a to 831c of the compensation circuit 831 are respectively connected in series between the power supply coil 5 and the resonant capacitor 6.

The switch 831 d is provided between the capacitor 831a and the resonant capacitor 6. Moreover, the switch 831 is configured to switch the connection state between the capacitor 831 a and the resonant capacitor 6 based on a command of the controller 801. Moreover, the switch 831e is provided between the capacitor 831b and the resonant capacitor 6. Moreover, the switch 831 is configured to switch the connection state between the capacitor 831 a and the resonant capacitor 6 based on a command of the controller 801. Moreover, the switch 831f is provided between the capacitor 831c and the resonant capacitor 6. Moreover, the switch 831 is configured to switch the connection state between the capacitor 831 a and the resonant capacitor 6 based on a command of the controller 801.

As a result, the controller 801 becomes able to change a synthetic capacitance of the resonant circuit 803 by changing the connection state of the switches 831d to 831f; therefore, it becomes possible to change a size of the resonant frequency. By using the switches 831d to 831f and the capacitors 831a to 831c, the resonant frequency of the resonant circuit 803 can be incrementally changed. Moreover, by changing the winding diameter D of the power supply coil 5 using the diameter changing unit 804, the resonant frequency of the resonant circuit 803 can be linearly (and not incrementally) changed.

Furthermore, other configurations of the power supply apparatus 800 according to one or more embodiments of the fifth example of the present invention are similar to the power supply apparatus 400 according to one or more embodiments of the third example of the present invention.

(Change Control Process of Capacitance of Compensation Circuit)

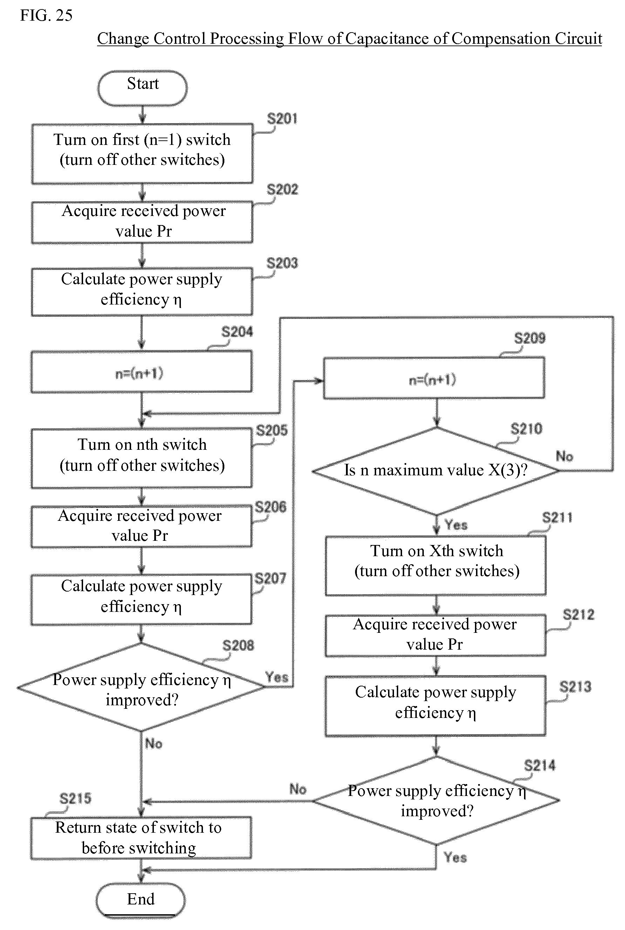

Next, a change control processing flow of the capacitance of the compensation circuit 802 by the power supply apparatus 800 according to one or more embodiments of the fifth example of the present invention will be described with reference to FIG.25. The following control process is executed by the controller 801. A first switch is the switch 831d, a second switch is the switch 831e, and a third switch is the switch 831f. Moreover, n is an integer of 1 to 3.

First, at step S201, the first switch is turned on and the other switches (the second and third switches) are turned off. Afterward, the flow proceeds to step S202.

At step S202, acquisition of the received power value Pr from the power receiving apparatus 500 is performed. Afterward, the flow proceeds to step S203.

At step 203, calculation of the power supply efficiency $\eta$ is performed. Afterward, the flow proceeds to step S204.

At step S204, 1 is added to n. Afterward, the flow proceeds to step S205.

At step S205, the nth switch is turned on and the other switches are turned off. Afterward, the flow proceeds to step S206.

At step S206, acquisition of the received power value Pr from the power receiving apparatus 500 is performed. Afterward, the flow proceeds to step S207.

At step 207, calculation of the power supply efficiency $\eta$ is performed. Afterward, the flow proceeds to step S208.

At step S208, it is determined whether the power supply efficiency $\eta$ is improved. That is, a comparison is made between the power supply efficiency $\eta$ calculated the previous time and the power supply efficiency $\eta$ calculated at the current step S207, and in a situation where the power supply efficiency $\eta$ of this time is greater, the flow proceeds to step S209. In a situation where the power supply efficiency $\eta$ of this time is equal to or less than the power supply efficiency $\eta$ of the previous time, the flow proceeds to step S215.

At step S209, 1 is added to n. Afterward, the flow proceeds to step S210.

At step S210, it is determined whether n is a maximum value X(3). In a situation where n is the maximum value X(3), the flow proceeds to step S211, and in a situation where n is not the maximum value X(3), the flow returns to step S205.

At step S211, an Xth (third) switch is turned on and the other switches are turned off. Afterward, the flow proceeds to step S212.

At step S212, acquisition of the received power value Pr from the power receiving apparatus 500 is performed. Afterward, the flow proceeds to step S213.

At step 213, calculation of the power supply efficiency $\eta$ is performed. Afterward, the flow proceeds to step S214.

At step S214, it is determined whether the power supply efficiency $\eta$ is improved. That is, a comparison is made between the power supply efficiency $\eta$ calculated the previous time and the power supply efficiency $\eta$ calculated at the current step S213, and in a situation where the power supply efficiency $\eta$ of this time is greater, the change control processing flow of the capacitance of the compensation circuit 831 is ended. In a situation where the power supply efficiency $\eta$ of this time is equal to or less than the power supply efficiency $\eta$ of the previous time, the flow proceeds to step S215.

At step S215, the state of the switch is returned to the connection state of before switching. That is, the state of the first to third switches is returned to the state of before the switching operation of the switches that is implemented immediately before. Afterward, the change control processing flow of the capacitance of the compensation circuit 831 is ended.

Furthermore, after the change control processing flow of the capacitance of the compensation circuit 831 ends, the change control process of the winding diameter D of the power supply coil 5 described above (see FIG. 19) is executed and the resonant frequency of the resonant circuit 803 is adjusted in more detail.

(Effects of Fifth Example)

According to one or more embodiments of the fifth example of the present invention, one or more of the following effects can be obtained.

According to one or more embodiments of the fifth example of the present invention, as above, the power supply apparatus 800 includes the compensation circuit 831 that includes the capacitors 831a to 831c respectively connected to the power supply coil 5, and the switches 831d to 831f respectively provided to the capacitors 831a to 831c and connected in series to the capacitors 831a to 831c. Moreover, the controller 801 is configured to perform the control of changing the winding diameter D (moving the end portion 51) by the driver 402 based on the information relating to power supply and perform the control of switching the connection state of the capacitors 831a to 831c of the compensation circuit 831 by the switches 831d to 831f based on the information relating to power supply. As a result, the resonant frequency of the power supply apparatus 800 can be adjusted in a greater range than compared to a situation of adjusting the resonant frequency of the power supply apparatus 800 by merely changing the winding diameter D of the power supply coil 5.

Furthermore, other effects of the power supply apparatus 800 according to one or more embodiments of the fifth example of the present invention are similar to those of the power supply apparatus 100 according to embodiments of the first example of the present invention.

(Sixth Example)

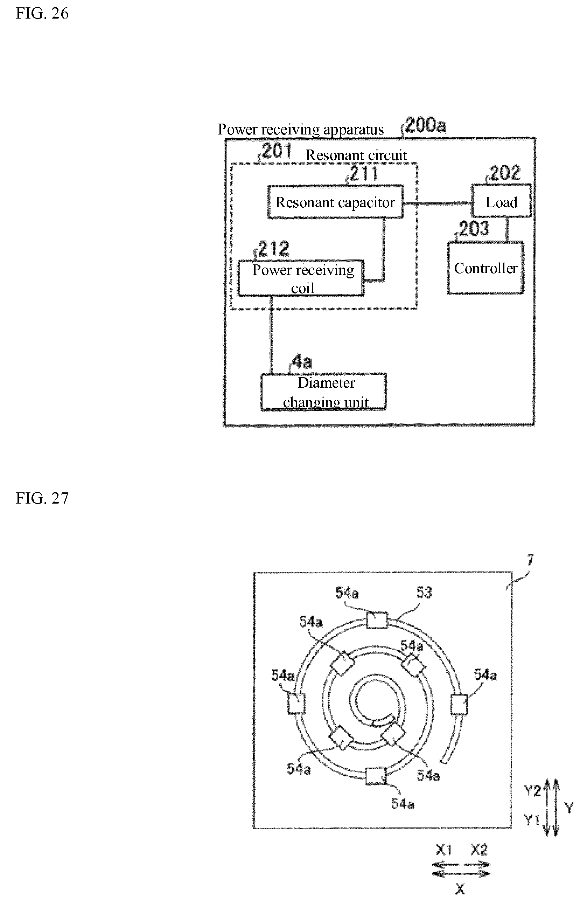

Next, a configuration of a power receiving apparatus 200a according to one or more embodiments of a sixth example of the present invention will be described with reference to FIG.26. The power receiving apparatus 200a according to one or more embodiments of the sixth example of the present invention includes a diameter changing unit 4a. Configurations identical to those of embodiments of the first to the fifth examples are labeled with the same reference signs and description thereof is omitted.

(Configuration of Power receiving apparatus According to Sixth Example)

As illustrated in FIG.26, the power receiving apparatus 200a according to one or more embodiments of the sixth example of the present invention includes the resonant circuit 201, the load 202, the controller 203, and the diameter changing unit 4a. The diameter changing unit 4a is one example of the "power-receiving-device-side diameter changing unit" of one or more embodiments of the present invention.

According to one or more embodiments of the sixth example of the present invention, the power receiving coil 212 is wound on one plane and has one end among end portions thereof fixedly disposed. The diameter changing unit 4a is configured to support another end among the end portions of the power receiving coil 212 to be movable and support at least a portion between the one end and the other end to be movable in a radial direction of the power receiving coil 212.

A configuration of the diameter changing unit 4a is similar to the configuration of the diameter changing unit 4 of the power supply apparatus 100 according to one or more embodiments of the first example of the present invention.

Furthermore, other configurations of a power supply apparatus 900 according to one or more embodiments of the sixth example of the present invention are similar to those of the power receiving apparatus 200 according to embodiments of the first example of the present invention.

(Effects of Sixth Example)

According to one or more embodiments of the sixth example of the present invention, one or more of the following effects such as below can be obtained.

According to one or more embodiments of the sixth example of the present invention, as above, by providing the power receiving apparatus 200a with the diameter changing unit 4a configured to support the other end among the end portions of the power receiving coil 212 to be movable and support at least a portion between the one end and the other end to be movable in the radial direction of the power receiving coil 212, the resonant frequency can be adjusted even in a situation where comparatively large power is supplied.

(Modified Examples)

Although the disclosure has been described with respect to only a limited number of embodiments, those skilled in the art, having benefit of this disclosure, will appreciate that various other embodiments may be devised without departing from the scope of the present invention. Accordingly, the scope of the invention should be limited only by the attached claims.

For example, in one or more embodiments of the first to sixth examples of the present invention, an example is illustrated where the power receiving apparatus of the present invention is applied as a mobile phone (smart phone), but the present invention is not limited thereto. That is, the power receiving apparatus may be applied to a device other than a mobile phone. For example, it may be applied as transport equipment such as an electric automobile. In this situation, the power supply apparatus may be configured as a power supply station for the transport equipment.

Furthermore, in one or more embodiments of the first to sixth examples of the present invention, an example is illustrated where the diameter changing unit is configured to move the end portion on the inner peripheral side of the power supply coil (power receiving coil), but the present invention is not limited thereto. For example, the diameter changing unit may be configured to move the end portion on the outer peripheral side of the power supply coil (power receiving coil).

Furthermore, in one or more embodiments of the first to sixth examples of the present invention, an example is illustrated of a configuration where the rotating member is provided to the diameter changing unit and the winding diameter of the power supply coil (power receiving coil) is changed by rotating the end portion of the power supply coil (power receiving coil), but the present invention is not limited thereto. For example, the diameter changing unit may be configured to move in a parallel manner the end portion of the power supply coil (power receiving coil).

Furthermore, in one or more embodiments of the first to sixth examples of the present invention, an example is illustrated where the covering member is configured to cover an entirety of the surface of the wire, but the present invention is not limited thereto. For example, as illustrated in the first modified example in FIG.27, a covering member 54a may be configured to cover a portion of the surface of the wire 53.

As illustrated in FIG.27, eight covering members 54a according to one or more embodiments of the first modified example of the first to sixth examples of the present invention includes intervals between each other so as to cover a portion of the surface of the wire 53 wound in the spiral.

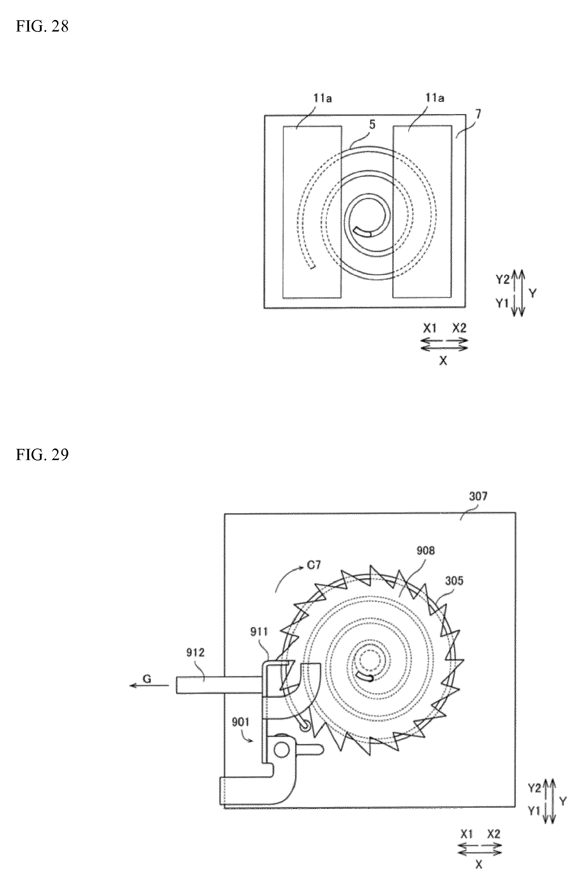

Furthermore, according to one or more embodiments of the first example of the present invention an example is illustrated where the substrate and the upper surface are used as the movement restricting member, but the present invention is not limited thereto. For example, as illustrated in the second modified example in FIG.28, a configuration may be such that the substrate 7 and a movement restricting member 11b are used as the movement restricting member.

As illustrated in FIG.28, the movement restricting member 11b and the substrate 7 according to one or more embodiments of the second modified example of the first example of the present invention are disposed to interpose from both sides in the arrow-Z direction the power supply coil 5 wound in the spiral. Moreover, the movement restricting member 11b is formed in a tabular shape, and a total of two thereof is provided, on the arrow-X1-direction side and the arrow-X2-direction side.

Furthermore, according to one or more embodiments of the second example of the present invention, an example is illustrated of configuring the rotating member to be fixed at the plurality of rotation angles by the lock member and to be able to rotate in rotation directions on both sides (the arrow-C5 direction and the arrow-C6 direction in FIG.12) when the winding diameter is changed, but the present invention is not limited thereto. For example, as illustrated in the third modified example in FIG.29, a rotating member 908 may be configured to be fixed at a plurality of rotation angles by a lock member 901 and to be able to rotate only in a rotation direction on one side (arrow-C7 direction) when the winding diameter is changed.

As illustrated in FIG.29, the rotating member 908 according to one or more embodiments of the third modified example of the second example of the present invention has a tooth portion of a serrated shape. Moreover, the lock member 901 includes a claw portion 911 and a lock release portion 912. The claw portion 911 is engaged to the tooth portion of the rotating member 908. The rotating member 908, when a force is applied thereto so as to rotate in the rotation direction on one side (arrow-C7 direction), moves by pushing the claw portion 911 to an arrow-G-direction side and is rotated. Meanwhile, the rotating member 908, when a force is applied thereto so as to rotate in a rotation direction on another side (opposite direction of the arrow-C7 direction), is not rotated in the rotation direction on the other side due to contacting the claw portion 911. Moreover, in a situation of returning the winding diameter to an initial size, a configuration is such that it is possible to return the winding diameter to the initial size (be rotated in the opposite direction of arrow C7) by disengaging the engagement between the claw portion 911 and the tooth portion of the rotating member 908 by the lock release portion 912 being pulled in the arrow-G direction by, for example, the user (person attempting to change the winding diameter) and the rotating member 908 being rotated in the rotation direction on the other side.

Furthermore, in one or more embodiments of the third to fifth examples of the present invention, an example is illustrated where as the rotation transmission member the belt is used, but the present invention is not limited thereto. For example, a configuration may be such that as the rotation transmission member not the belt but a plurality of gears is used to mesh with each other to transmit the rotation from the driver to the rotating member.

Furthermore, in one or more embodiments of the third to fifth examples of the present invention, an example is illustrated where as the belt of the rotation transmission member the flat belt is used, but the present invention is not limited thereto. That is, as the belt of the rotation transmission member, a belt other than the flat belt may be used. For example, as the belt of the rotation transmission member, a timing belt (toothed belt) may be used.

Furthermore, in one or more embodiments of the third to fifth examples of the present invention, an example is illustrated where the controller is configured to stop power supply in the situation where the power supply efficiency is small or the standing wave ratio is large based on the information relating to power supply, but the present invention is not limited thereto. For example, the controller may be configured to reduce the supplied power in the situation where the power supply efficiency is small or the standing wave ratio is large based on the information relating to power supply.

Furthermore, one more embodiments of the first to sixth examples of the present invention are described as separate forms, but the present invention is not limited thereto. For example, a configuration may be such that the power receiving apparatus according to one or more embodiments of the sixth example of the present invention may include the diameter changing unit described in one more embodiments of the first to fifth examples of the present invention.

Furthermore, in one more embodiments of the third to fifth examples of the present invention, for the sake of convenience, the processing of the controller according to one or more embodiments of the present invention is described using a flowchart of a flow-driven type that performs processing in order along the processing flow, but the present invention is not limited thereto. In one or more embodiments of the present invention, processing operations of the controller may be performed by processing of an event-driven type that executes processes by event. In this situation, this may be completely event-driven or a combination of being event-driven and flow-driven.

[Explanation of References]

2 Power source
4, 4a, 304, 404, 604, 804 Diameter changing unit (Inductance changing unit)
4a Diameter changing unit (power-receiving-device-side diameter changing unit)
5, 305 Power supply coil
6 Resonant capacitor
7, 307 Substrate (base, movement restricting unit)
8, 308, 408, 908 Rotating member
9 Guide portion
11 Upper surface (movement restricting member)
11b Movement restricting member
51, 351 End portion
52, 352 End portion
53 Wire
54, 54a Covering member
100, 300, 400, 600, 800 Power supply apparatus
200, 200a, 500, 700 Power receiving apparatus
212 Power receiving coil
301, 901 Lock member
401,601,801 Controller
402 Driver
403 Rotation transmission member
405 Communication unit
431 Worm gear (lock member)
432 Helical gear (lock member)
602 Standing wave ratio measurement unit
831 Compensation circuit
831 a to 831 c Capacitor
831d to 831f Switch

**Claims**

1. A power supply apparatus comprising:

    a resonant circuit (3, 303) that comprises a coil (5, 305) wound on a plane and determines a resonant frequency;
    a driver that drives the resonant circuit (3, 303); and
    an inductance changing unit (4, 4a, 304, 404, 604, 804) connected to a first end portion (51, 351) of the coil, wherein
    the inductance changing unit (4, 4a, 304, 404, 604, 804) moves the first end portion (51, 351) of the coil (5, 305) and changes inductance of the coil.

2. The power supply apparatus according to claim 1, wherein the inductance changing unit (4, 4a, 304, 404, 604, 804) moves the first end portion (51, 351) of the coil and changes a winding diameter of the coil (5, 305).

3. The power supply apparatus according to claim 2, wherein the inductance changing unit changes an average value of the winding diameter.

4. The power supply apparatus according to any one of claims 1 to 3, wherein the inductance changing unit moves either the first end portion (51, 351) or a second end portion (52, 352) of the coil.

5. The power supply apparatus according to any one of claims 1 to 3, wherein

    one of the first end portion and a second end portion (51, 351, 52, 352) of the coil is disposed more on an outer side in a radial direction of the coil than the other end portion, and
    the inductance changing unit moves the other end portion.

6. The power supply apparatus according to claim 5, wherein the one end portion is fixed to a base (7, 307) on which the coil (5, 305) is disposed.

7. The power supply apparatus according to claim 5 or 6, wherein the inductance changing unit includes a rotating member (8, 308, 408, 908) that rotates together with the other end portion.

8. The power supply apparatus according to claim 7, wherein the rotating member (8, 308, 408, 908) is disposed in a center of the coil (5, 305) on the plane.

9. The power supply apparatus according to claim 7 or 8, wherein

    the rotating member comprises a top member (83) comprising a groove portion (83b), and
    a tip of a rotation tool engages with the groove portion (83b) of the top member.

10. The power supply apparatus according to claim 7, wherein the inductance changing unit comprises a lock member (301, 901) that fixes the rotating member at a plurality of rotation angles.

11. The power supply apparatus according to any one of claims 1 to 10, wherein the inductance changing unit comprises a rotational power transmission member (403) that has a rotational center more on an outer side than the coil (5, 305).

12. The power supply apparatus according to any one of claims 1 to 11, further comprising a movement restricting member (11, 11b, 7) that interposes the coil (5, 305) from both sides in a direction perpendicular to the plane.

13. The power supply apparatus according to any one of claims 1 to 12, wherein

the coil (5, 305) comprises:

a wire (53) that is a conductor and is wound in a spiral on the plane; and
a covering member (54, 54a) that covers at least a portion of the wire (53), and

the covering member (54, 54a) has a thickness that is equal to or greater than one half of a diameter of the wire (53).

14. The power supply apparatus according to claim 13, wherein the covering member (54, 54a) is an insulator and a nonmagnetic body.

15. The power supply apparatus according to any one of claims 1 to 14, further comprising a guide portion (9), wherein

the coil (5) is wound in a spiral on a base (7), and
the guide portion (9)

is fixedly disposed on the base (7) along the coil, and
contacts and guides a portion of the coil (5) when the inductance changing unit changes a winding diameter.

FIG. 1

FIG. 2

FIG. 3

FIG. 4

FIG. 5

$$Da \left( = \frac{D1+D2+D3}{3} \right)$$

FIG. 6

FIG. 7

Before diameter change    5    Db (35mm)    Dc(43mm)

After diameter change    5    Db (30mm)    Dc(43mm)

FIG. 8

FIG. 9

FIG. 10

Before diameter change

FIG. 11

After diameter change

FIG. 12

FIG. 13

FIG. 14

FIG. 15

FIG. 16

FIG. 17

FIG. 18

FIG. 19

Change Control Processing Flow of Winding Diameter

```
                    ┌──────────────┐
                    │    Start     │
                    └──────┬───────┘
                           │         S1
                  ┌────────▼─────────┐
                  │   Start power    │
                  │     supply       │
                  └────────┬─────────┘
        S2                 │◄──────────────────────────────────────┐
  ┌────────────────┐       │                                       │
  │ Acquire received power │                                       │
  │ value Pr from power    │                                       │
  └────────┬───────────────┘                                       │
                  │         S3                                      │
         ┌────────▼─────────┐                                       │
         │ Calculate power supply │                                 │
         │   efficiency η   │                                       │
         └────────┬─────────┘                                       │
                  │              S4           S7                     │
                  ▼                    ┌──────────────────────┐     │
              ◇───────────◇   Yes      │ Notify by notification unit │
            Power supply efficiency η ─►│ that power supply efficiency │
            less than stopping threshold│ η is exceedingly low  │    │
              ◇───────────◇            └──────────┬───────────┘     │
                  │ No                        S8  │                  │
                  │                    ┌──────────▼───────────┐     │
                  │                    │  Stop power supply   │     │
                  │                    └──────────┬───────────┘     │
                  │                              (A)                 │
                  │              S5           S9                     │
                  ▼                    ┌──────────────────────┐     │
              ◇───────────◇   Yes      │ Notify by notification unit │
            Power supply efficiency η ─►│ that power supply efficiency│──►
            less than notifying threshold│ η is comparatively low │    
              ◇───────────◇            └──────────────────────┘
                  │ No            S6
                  ▼                       S10
              ◇───────────◇   Yes   ┌──────────────────────┐
            Power supply efficiency η ►│ Change winding diameter D │
            less than optimum threshold│ of power supply coil by │──┘
              ◇───────────◇          │    driving driver    │
                  │ No               └──────────────────────┘
                  ◄─────(A)
           ┌──────▼───────┐
           │     End      │
           └──────────────┘
```

FIG. 20

Power supply apparatus 600

Resonant circuit 3

2 Power source

6 Resonant capacitor

5 Power supply coil

602 Standing wave ratio measurement unit

604

601 Controller

408 Rotating member

403 Rotation transmission member

402 Driver

Diameter changing unit

406 Notification unit

Power receiving apparatus 700

201 Resonant circuit

211 Resonant capacitor

202 Load

212 Power receiving coil

FIG. 21

Standing wave measurement unit                    602

FIG. 22

Change Control Processing Flow of Winding Diameter

```
            ┌──────────┐
            │  Start   │
            └────┬─────┘
                 │
                 ▼           S1
        ┌──────────────────┐
        │ Start power supply│
        └────────┬─────────┘
                 │
                 ▼          S101
        ┌──────────────────┐
        │ Calculate standing│
        │     wave ratio ρ  │
        └────────┬─────────┘
                 │
                 ▼   S102
          ◇ Standing wave ◇   Yes   ┌──────────────────────┐ S105
          ◇ ratio ρ less   ◇ ─────▶ │ Notify by notification│
          ◇ than stopping  ◇        │ unit that Standing wave│
          ◇ threshold Th4? ◇        │ ratio ρ is exceedingly │
                 │ No               │       high             │
                 │                  └──────────┬────────────┘
                 │                             │        S8
                 │                  ┌──────────▼────────────┐
                 │                  │   Stop power supply    │
                 │                  └──────────┬────────────┘
                 │                             ▼
                 │                           ( B )
                 ▼   S103
          ◇ Standing wave ◇   Yes   ┌──────────────────────┐ S106
          ◇ ratio ρ less   ◇ ─────▶ │ Notify by notification│
          ◇ than notifying ◇        │ unit that standing wave│
          ◇ threshold      ◇        │ ratio ρ is             │
                 │ No               │ comparatively high     │
                 │                  └──────────┬────────────┘
                 ▼   S104                       │
          ◇ Standing wave ◇   Yes   ┌──────────────────────┐ S10
          ◇ ratio ρ less   ◇ ─────▶ │ Change winding        │
          ◇ than optimum   ◇        │ diameter D of power   │
          ◇ threshold Th6? ◇        │ supply coil by        │
                 │ No               │ driving driver        │
                 │                  └──────────────────────┘
                 ◀──── ( B )
                 ▼
            ┌──────────┐
            │   End    │
            └──────────┘
```

FIG. 23

FIG. 24

FIG. 25

Change Control Processing Flow of Capacitance of Compensation Circuit

```
                    ┌──────────┐
                    │  Start   │
                    └────┬─────┘
                         │
         ┌───────────────▼───────────────┐  S201
         │  Turn on first (n=1) switch    │
         │  (turn off other switches)     │
         └───────────────┬───────────────┘
                         │
         ┌───────────────▼───────────────┐  S202
         │  Acquire received power        │
         │  value Pr                      │
         └───────────────┬───────────────┘
                         │
         ┌───────────────▼───────────────┐  S203
         │  Calculate power supply        │
         │  efficiency η                  │
         └───────────────┬───────────────┘
                         │
         ┌───────────────▼───────────────┐  S204
         │          n=(n+1)               │
         └───────────────┬───────────────┘
                         │
         ┌───────────────▼───────────────┐  S205
         │  Turn on nth switch            │
         │  (turn off other switches)     │
         └───────────────┬───────────────┘
                         │
         ┌───────────────▼───────────────┐  S206
         │  Acquire received power        │
         │  value Pr                      │
         └───────────────┬───────────────┘
                         │
         ┌───────────────▼───────────────┐  S207
         │  Calculate power supply        │
         │  efficiency η                  │
         └───────────────┬───────────────┘
                         │
              S208  ◇────▼────◇  Yes
         Power supply efficiency η ───────→
              improved?
                    │ No
```

S209  n=(n+1)

S210  Is n maximum value X(3)?   No

S211  Turn on Xth switch (turn off other switches)   Yes

S212  Acquire received power value Pr

S213  Calculate power supply efficiency η

S214  Power supply efficiency η improved?   No / Yes

S215  Return state of switch to before switching

End

FIG. 26

Power receiving apparatus 200a

Resonant circuit 201

Resonant capacitor 211

Load 202

Controller 203

Power receiving coil 212

Diameter changing unit 4a

FIG. 27

54a 53
54a
54a
54a
54a 54a
54a
54a
54a
54a
7

Y2 Y
Y1

X1 X2
X

FIG. 28

FIG. 29

Europäisches Patentamt
European Patent Office
Office européen des brevets

# EUROPEAN SEARCH REPORT

Application Number

EP 16 17 2745

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/129455 A1 (YAZAKI CORP) 28 August 2014 (2014-08-28) * the whole document * & US 2015/348692 A1 (NGAHU ANTONY [JP]) 3 December 2015 (2015-12-03) | 1-15 | INV. H02J50/10 H01F21/04 ADD. H01F21/00 |
| Y | US 2004/130915 A1 (BAARMAN DAVID W [US]) 8 July 2004 (2004-07-08) * paragraphs [0036] - [0037]; figure 1 * * paragraph [0061] - paragraph [0064]; figure 7 * | 1-15 | |
| Y | US 2012/242550 A1 (SNYDER CARL J [US] ET AL) 27 September 2012 (2012-09-27) * paragraph [0105]; figure 8m * | 1-15 | |
| A | DE 915 378 C (SIEMENS AG) 22 July 1954 (1954-07-22) * the whole document * | 1-15 | |
| A | US 6 184 755 B1 (BARBER BRADLEY P [US] ET AL) 6 February 2001 (2001-02-06) * abstract; figure 10 * | 1-15 | TECHNICAL FIELDS SEARCHED (IPC) H02J H01F |

The present search report has been drawn up for all claims

| Place of search | Date of completion of the search | Examiner |
|---|---|---|
| Munich | 28 September 2016 | Ríos Báez, Abel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 17 2745

This annex lists the patent family members relating to the patent documents cited in the above-mentioned European search report.
The members are as contained in the European Patent Office EDP file on
The European Patent Office is in no way liable for these particulars which are merely given for the purpose of information.

28-09-2016

| Patent document cited in search report | Publication date | Patent family member(s) | Publication date |
|---|---|---|---|
| WO 2014129455 A1 | 28-08-2014 | CN 105074850 A<br>DE 112014000885 T5<br>JP 2014160702 A<br>US 2015348692 A1<br>WO 2014129455 A1 | 18-11-2015<br>05-11-2015<br>04-09-2014<br>03-12-2015<br>28-08-2014 |
| US 2004130915 A1 | 08-07-2004 | AT 476776 T<br>CN 1768462 A<br>CN 101232189 A<br>CN 101588075 A<br>CN 103107709 A<br>EP 1590867 A2<br>EP 2161806 A2<br>EP 2161807 A2<br>EP 2242161 A2<br>EP 2403095 A2<br>EP 2403096 A2<br>EP 2403097 A2<br>EP 2403098 A2<br>EP 2403099 A2<br>EP 2403100 A2<br>EP 2403101 A2<br>HK 1083708 A1<br>JP 5350909 B2<br>JP 5511236 B2<br>JP 5986151 B2<br>JP 2006517778 A<br>JP 2009213351 A<br>JP 2009213352 A<br>JP 2012213324 A<br>JP 2013009590 A<br>JP 2014226033 A<br>KR 20050105200 A<br>KR 20090100428 A<br>KR 20110047283 A<br>MY 144392 A<br>MY 144400 A<br>TW 200425609 A<br>US 2004130915 A1<br>US 2009212628 A1<br>US 2010033023 A1<br>US 2011177782 A1<br>US 2011177783 A1<br>US 2011189954 A1<br>US 2011269399 A1<br>US 2011273026 A1 | 15-08-2010<br>03-05-2006<br>30-07-2008<br>25-11-2009<br>15-05-2013<br>02-11-2005<br>10-03-2010<br>10-03-2010<br>20-10-2010<br>04-01-2012<br>04-01-2012<br>04-01-2012<br>04-01-2012<br>04-01-2012<br>04-01-2012<br>04-01-2012<br>05-11-2010<br>27-11-2013<br>04-06-2014<br>06-09-2016<br>27-07-2006<br>17-09-2009<br>17-09-2009<br>01-11-2012<br>10-01-2013<br>04-12-2014<br>03-11-2005<br>23-09-2009<br>06-05-2011<br>15-09-2011<br>15-09-2011<br>16-11-2004<br>08-07-2004<br>27-08-2009<br>11-02-2010<br>21-07-2011<br>21-07-2011<br>04-08-2011<br>03-11-2011<br>10-11-2011 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**

EP 16 17 2745

This annex lists the patent family members relating to the patent documents cited in the above-mentioned European search report.
The members are as contained in the European Patent Office EDP file on
The European Patent Office is in no way liable for these particulars which are merely given for the purpose of information.

28-09-2016

| Patent document cited in search report | Publication date | Patent family member(s) | Publication date |
|---|---|---|---|
| | | US 2011275319 A1 | 10-11-2011 |
| | | US 2011298298 A1 | 08-12-2011 |
| | | US 2012043827 A1 | 23-02-2012 |
| | | US 2012205989 A1 | 16-08-2012 |
| | | US 2013095758 A1 | 18-04-2013 |
| | | US 2014368054 A1 | 18-12-2014 |
| | | WO 2004073166 A2 | 26-08-2004 |
| US 2012242550 A1 | 27-09-2012 | US 2012242550 A1 | 27-09-2012 |
| | | US 2013063319 A1 | 14-03-2013 |
| | | US 2015077117 A1 | 19-03-2015 |
| DE 915378 C | 22-07-1954 | NONE | |
| US 6184755 B1 | 06-02-2001 | EP 1069576 A1 | 17-01-2001 |
| | | JP 4797199 B2 | 19-10-2011 |
| | | JP 2001076935 A | 23-03-2001 |
| | | JP 2007158360 A | 21-06-2007 |
| | | US 6184755 B1 | 06-02-2001 |

EPO FORM P0459

For more details about this annex : see Official Journal of the European Patent Office, No. 12/82

**EP 3 101 780 A1**

**Patent documents cited in the description**

- JP 2011166883 A